# EUROPÄISCHE PATENTSCHRIFT

(11) **EP 3 212 723 B1**
(45) Veröffentlichungstag und Bekanntmachung des Hinweises auf die Patenterteilung: **16.06.2021**
(21) Anmeldenummer: 15790041.6
(22) Anmeldetag: 15.10.2015
(51) Int. Cl.: C09J 175/04, B32B 7/12, B32B 37/12, B32B 9/00, B32B 9/04, B32B 15/08, B32B 15/20, B32B 27/08, B32B 27/30, B32B 27/32, B32B 27/34, B32B 27/36, C08G 18/79, C08J 3/24, C08J 5/12, C09J 5/02, C09J 5/06, C09J 7/10, B32B 17/06, B32B 15/18

(54) **VERKLEBUNG ZWEIER SUBSTRATE MITTELS LATENTREAKTIVER KLEBEFILME**
ADHESION OF TWO SUBSTRATES BY MEANS OF A LATENTLY REACTIVE ADHESIVE FILM
ADHÉSION DE DEUX SUBSTRATS AU MOYEN D' UN FILM ADHÉSIF À RÉACTIVITÉ LATENTE

(30) Priorität: 31.10.2014 DE 102014222259
(43) Veröffentlichungstag der Anmeldung: 06.09.2017
(73) Patentinhaber: tesa SE, 22848 Norderstedt (DE)
(72) Erfinder: DOLLASE, Thilo, 22397 Hamburg (DE); KOOP, Matthias, 22848 Norderstedt (DE); REITER, Sven, 22850 Norderstedt (DE); SCHMITZ-STAPELA, Daniel, 22529 Hamburg (DE); KATZ, Susanne, 22417 Hamburg (DE); STOLTZE, Jerome, 22527 Hamburg (DE)
(74) Vertreter: tesa SE
(86) Internationale Anmeldenummer: PCT/EP2015/073935
(87) Internationale Veröffentlichungsnummer: WO 2016/066441

(56) Entgegenhaltungen:
- WO-A1-2013/127697
- US-A- 5 109 057

## Beschreibung

Die Erfindung betrifft einen Verbund aus zwei Substraten, von denen zumindest eines auf der zu verklebenden Seite anorganischen (hydrophilen) Charakter aufweist, die mittels eines latentreaktiven Klebefilms verklebt sind, insbesondere zur Verwendung für optische, elektronische und/oder feinmechanische Geräte. Mittels eines auf der zu verklebenden Seite des Substrats mit anorganischem Charakter aufgebrachten Silan enthaltenden Primers lässt sich die Verbundfestigkeit unter Feucht-/Wärme-Einfluss verbessern. Die Erfindung betrifft zudem ein Verfahren zur Herstellung von Verbunden der genannten Art.

Nahezu alle Geräte der modernen Unterhaltungselektronik weisen visuelle Anzeigesysteme zur Anzeige des Betriebszustands des Geräts oder weiterer Informationen auf. Sind dabei komplexere Zusammenhänge darzustellen, so werden zur Anzeige häufig Anzeigemodule auf der Grundlage von Flüssigkristallen (LCD) oder von organischen Leuchtdioden (OLED) eingesetzt. Solche Anzeigen kommen etwa bei Digitalkameras, tragbaren Kleinstcomputern und Mobiltelefonen zum Einsatz. Zum Schutz der Anzeigemodule vor einer etwaigen Beschädigung durch äußere mechanische Einwirkung wie zum Beispiel Stößen weisen derartige Anzeigesysteme üblicherweise transparente Schutzfenster auf, die die Außenseite der Anzeigemodule bedecken und so die Gefahr einer direkten Einwirkung auf das Modul vermindern. Ein derartiger Schutz ist ebenfalls bei nichtelektronischen visuellen Anzeigesystemen erforderlich, etwa bei mechanischen Anzeigen wie beispielsweise Uhren oder Füllstandsanzeigen an Vorratsgefäßen. Als Schutzfenster wird häufig Glas eingesetzt, da es auf Grund seiner Haptik gegenüber Kunststoffen Vorteile bietet. Glas ist zudem inert gegenüber organischen Lösemitteln und infolge der großen Härte auch kratzbeständig, wodurch es einen hochwertigen Eindruck vermittelt. Scheiben aus Glas kommen auch zum Einsatz, wenn es um die Erfüllung optischer Funktionen, wie Lichtbrechung, -bündelung, -abschwächung oder -verstärkung geht. Bei dem Einbau derartiger Linsen in die Halterung bzw. den Gerätekörper kommt es zu ähnlichen Anforderungen wie bei den vorbeschriebenen Fenstern.

Eine Verklebung, für die in den letzten Jahren insbesondere im Electronics-Bereich, so zum Beispiel bei Mobiltelefonen oder sogenannten Laptop-Computern, zunehmend Bedarf entsteht, ist die Verklebung von eloxiertem Aluminium. Eloxiertes Aluminium gewinnt als Dekormaterial bei Elektronik-Geräten immer weiter an Bedeutung. Sogenanntes eloxiertes oder auch anodisiertes Aluminium, d.h. mit dem Eloxal-Verfahren verarbeitetes Aluminium, ist Aluminium, an dessen Oberfläche eine oxidische Schutzschicht durch anodische Oxidation des Aluminiums gebildet wurde. Dabei wird im Gegensatz zu den galvanischen Überzugsverfahren die Schutzschicht nicht auf dem Werkstück niedergeschlagen, sondern durch Umwandlung der obersten Metallschicht ein Oxid bzw. ein Hydroxid gebildet. Diese weist daher eine besonders gute Verbindung zum Aluminium auf. Es entsteht eine 5 bis 25 µm dicke Schicht, die tiefere Schichten solange vor Korrosion schützt, wie keine Lücken, beispielsweise durch mechanische Beschädigung, in dieser Schicht entstehen.

Die Verklebung verschiedener Substrate in elektronischen Geräten, insbesondere tragbaren Kleingeräten wie Mobiltelefonen und dergleichen, geschieht heutzutage hauptsächlich mittels doppelseitiger Selbstklebebänder.

In modernen Geräten der Consumer-Elektronik aber auch anderen Mobilgeräten müssen oftmals verschiedene Bauteile zum Teil mit nur sehr geringen Stegbreiten miteinander verklebt werden. Unter "Steg" bzw. "Stegbreite" sei in diesem Zusammenhang die Ausgestaltung eines doppelseitig klebenden Materials zu verstehen. Statt einer vollflächigen Verklebung ist oft nur eine Rahmenverklebung gewünscht. Das Klebesystem kommt dabei als konfektionierter Abschnitt zum Einsatz, der ein Segment ("Steg") aufweisen kann mit geringer Breite ("Stegbreite"). Es kann sich dabei um Stegbreiten in zumindest einem Abschnitt des Verklebungsbereichs von höchstens 2 mm, höchstens 1 mm, höchstens 0,8 mm oder sogar um etwa 0,5 mm handeln. Die Verklebungsstärken von Selbstklebebändern reichen dabei oft nicht aus, so dass in diesen Fällen häufig auf reaktive Flüssigkleber zurückgegriffen wird. Die Verwendung von Flüssigklebern ist jedoch mit einigen Nachteilen verbunden, da sie mit erheblichen Geruchsbelastungen verknüpft ist. Außerdem sind Flüssigkleber schwer zu handhaben. Daher werden Klebesysteme gesucht, die einen geringen Dampfdruck aufweisen und für eine sauberere Verarbeitung in flächiger Form zur Verfügung stehen. Dazu bieten sich hitzeaktivierbare Folien an. Da auch thermosensitive Substrate miteinander verklebt werden sollen, besteht der Bedarf, hitzeaktivierbare Folien anzubieten, die schon bei sehr geringen Temperaturen (T höchstens 120 °C oder sogar nicht mehr als 100 °C) verarbeitet werden können. Beispiele für besonders thermosensitive Substrate, die Verarbeitungstemperaturen deutlich oberhalb 100 °C nicht tolerieren, sind anodisiertes (eloxiertes) Aluminium, verschiedene (transparente) Kunststoffe und einige oberflächenmodifizierte Bauteile.

Der Fachmann ist daher interessiert an geeigneten und immer besseren Klebesystemen für doppelseitige Klebefilme zur Verklebung zum Beispiel solcher Abdeckgläser oder Linsen mit Halterungen oder Gehäusen. Das Anforderungsprofil für Klebesysteme für diese Anwendungen umfasst eine hohe Ausstoßfestigkeit (also die Verklebungsfestigkeit des Bauteils in seiner Halterung, sogenannte "Push-Out-Festigkeit") und oft auch gleichzeitig hoher Schlagzähigkeit auch bei niedrigen Temperaturen, damit einzelne Bauelemente beim Herunterfallen nicht an der Klebefuge auseinanderbrechen. Im Hinblick auf die Verklebungsfestigkeit erscheinen Klebesysteme mit einer Schicht eines latentreaktiven Klebefilms sehr gut geeignet. Beispiele für latentreaktive Klebefilme sind bei Habenicht (G. Habenicht, Kleben, 6. Aufl., 2009, J. Springer, Heidelberg, S. 242-243) zu finden. Typisch für solche Systeme ist die Existenz eines Reaktivsystems innerhalb eines Films, bei dem die Reaktionspartner unterhalb der Verarbeitungsbedingungen (also zumeist bei reduzierter Temperatur) effektiv voneinander getrennt vorliegen oder einer der Reaktionspartner in seiner Reaktivität in anderer Weise gehemmt ist, so dass eine Reaktion/Härtung unter diesen Bedingungen unterdrückt ist. Viele solcher latentreaktiven Klebefilme, zum Beispiel solche auf Basis Epoxid/Dicyandiamid (B. Müller, W. Rath, Formulierung von Kleb- und Dichtstoffen, 2. Aufl., 2009, Vinzentz Network, Hannover, S. 167-169) benötigen für die Härtung jedoch Temperaturen, die für empfindliche Bauteile zu hoch liegen. Nur spezielle Reaktivsysteme sind daher für die Verklebung empfindlicher Bauteile einsetzbar.

Als vorteilhaft für hohe Verklebungsfestiglkeiten bei geringen Verklebungstemperaturen bieten sich Klebeprodukte mit mindestens einer Schicht eines latentreaktiven Klebefilms, der eine thermoplastische Komponente, die funktionelle Gruppen enthält, die mit Isocyanat reagieren können, und eine Isocyanat-haltige Komponente, die partikulär in die thermoplastische Komponente eindispergiert vorliegt und blockiert (siehe z. B. B. Müller, W. Rath, Formulierung von Kleb- und Dichtstoffen, 2. Aufl., 2009, Vinzentz Network, Hannover, S. 141-144 als technologisches Anschauungsmaterial), mikroverkapselt (siehe z. B. US 4,483,744 und J.-M. Pernot, B. Pouyet, H. Brun, S. Briancon in Microspheres, Microcapsules & Liposomes, Vol. 1, R. Arshady (Hrsg.), Citus Books, London, S. 441-456 als technologisches Anschauungsmaterial) oder im Bereich der Partikeloberfläche im Wesentlichen desaktiviert (siehe z. B. WO 99/29755 als technologisches Anschauungsmaterial) ist, enthält und aus wässriger Dispersion erzeugt wird, an.

WO 93/25599 A1 offenbart Formulierungen für latentreaktive Polyurethan-Systeme, die desaktivierte Polyisocyanate, die bei Temperaturen oberhalb 55 °C Reaktivität aufweisen, und Polymere enthalten, die bei Temperaturen oberhalb 40 °C schmelzbar sind und mit Isocyanat reagieren können. Diese Formulierungen können auf Substrate beschichtet werden, die dann verklebt werden können. Die Vorbehandlung von zu verklebenden Substraten mit einem Primer wird nicht beschrieben.

DE 10 2010 013 145 A1 beschreibt Klebemassen, die hitzeaktivierbar und latentreaktiv sind. Bei Raumtemperatur weisen sie leichte Haftklebrigkeit auf und nach einer ersten Erwärmung und Abkühlung noch für eine gewisse Zeit Klebrigkeit. Bevorzugt basieren diese Klebemassen auf Polyurethanen. Die Vorbehandlung von zu verklebenden Substraten mit einem Primer wird nicht beschrieben.

Die WO 99/29755 beschreibt reaktive Polyurethan-Klebesysteme auf Basis wässriger Polyurethan-Dispersionen. In die Matrix eines thermoplastischen Polyurethans, das noch funktionelle Gruppen für eine Reaktion mit Isocyanaten trägt, sind Polyisocyanat-Partikel, die an ihrer Oberfläche desaktiviert sind, eindispergiert. Bei einer ersten Temperatur schmilzt das thermoplastische Polyurethan. Bei einer Temperatur darüber löst sich die desaktivierte Partikeloberfläche auf und die Isocyanatgruppen können mit den funktionellen Gruppen des thermoplastischen Polyurethans reagieren. Die Formulierungen können unter anderem Silane enthalten. Silane in der Funktion eines Adhäsionspromotors auf diese Weise einzusetzen birgt allerdings den Nachteil, dass Silane in wässrigem Medium hydrolysieren und kondensieren können, so dass ihre Grenzflächenaktivität reduziert sein kann. Zusätzlich kann ihre Wirkweise beeinträchtigt werden durch mögliche weitere Bestandteile der Dispersion wie Stabilisatoren und Einstellmaßnahmen eines für die Stabilität der Dispersion wichtigen pH-Werts. Einmischung einer aktiven Substanz wie ein Silan in die Klebeformulierung selbst erfordert zudem eine höhere Einsatzmenge der aktiven Substanz, da ihr Großteil im Volumen der Klebeschicht verbleibt und nicht an der Zieloberfläche wirkt. Die Vorbehandlung von zu verklebenden Substraten mit einem Primer und die hiermit verbundenen Effekte werden in WO 99/29755 nicht beschrieben.

US 6,797,764 B2 beschreibt wässrige Klebeformulierungen auf Polyurethan-Basis. Diese können Adhäsionspromotoren wie Silane enthalten. Als Besipiel für zu verklebende Materialien werden neben Kunststoffen Edelstahl, Aluminium, Kupfer, Eisen, kalt gewalzter Stahl, und phosphatisierter Stahl angegeben. Anwendungen für Elektronik- und Mobilgeräte sind nicht genannt. Die Klebemassen sind zudem nicht latent reaktiv.

WO 00/34403 A1 beschreibt wässrige Klebeformulierungen auf Polyurethan-Basis für die Verklebung von Gummiartikeln. Die Gummiartikel können mit einem Primer vorbehandelt sein. Die Offenbarung lehrt, dass die Hydrolysebeständigkeit von Polyestergruppen durch Zusatz von Epoxiden verbessert werden kann. Als Ursache für unerwünschte Hydrolyse werden chemische Abbauprodukte des Primers angegeben. Anwendungen für Elektronik- und Mobilgeräte sind nicht genannt. Die Klebemassen sind zudem nicht latent reaktiv. In diesem speziellen Fall erscheint die angegebene Kombination aus Polyurethan-basierendem Klebstoff und Primer als ungünstig für die Stabilität des verklebten Verbunds.

WO 2013/127697 A1 betrifft die Verklebung von eloxiertem Aluminium mit einem Kunststoff mittels eines Polyurethan-basierenden latentreaktiven Klebefilms. Kunststoffmaterialien können oberflächenmodifiziert sein und anorganische Schichten tragen. Gläser und weitere Metalle als zu verklebende Materialien sind nicht genannt. Die Vorbehandlung von zu verklebenden Substraten durch einen Primer ist nicht genannt.

Der Einfluss von Kopplungsagenzien wie Silanen als Adhäsionspromotoren grundsätzlich ist in der Literatur zum Beispiel durch Plueddemann (E. P. Plueddemann in "Fundamentals of Adhesion", L. H. Lee (Hrsg.), Plenum Press, New York, 1991) beschrieben. In diesem Sinne lassen sich Adhäsionspromotoren / Primer als Mittel zur Steigerung von Adhäsion / Verklebungsfestigkeit verstehen, nicht jedoch als Mittel, um eine vorhandene Verklebungsfestigkeit gegenüber äußeren Einflüssen zu konservieren. Spezifische weitere vorteilhafte Nutzung an sich und im Hinblick auf spezielle Kombinationen aus Klebefilm, Substrat und Primer sind nicht genannt.

DE 10 2007 030 196 A1 und DE 10 2009 007 930 A1 beschreiben Silan-Lösungen zur Vorbehandlung einer hydrophilen Oberfläche zur Hydrophobierung für die Verbesserung der Adhäsion von Haftklebeschichten. Die Nutzung latentreaktiver Klebefilme zur Verklebung von Substraten mit anorganischem Charakter wird nicht genannt. Ebenso wird nicht beschrieben, dass die Verklebungsfestigkeit unter Feucht-/Wärme-Einfluss für den speziellen Fall von Elektronik- oder Mobilgeräten durch Einsatz eines Primers verbessert werden kann.

Eine zentrale Anforderung an Geräte der modernen Unterhaltungselektronik und andere Mobilgeräte ist aber die Beständigkeit unter Feucht-/Wärme-Bedingungen. So werden Verbundfestigkeiten für verklebte Substrate in ihrer Festigkeit vor und nach Feucht-/Wärme-Lagerung bestimmt und verglichen. Ein zu starker Abfall der Verklebungsfestigkeit unter diesen Bedingungen ist unerwünscht. Die Verklebungsfestigkeit anorganischer (hydrophiler) Oberflächen mit einem Polyurethan-basierenden latentreaktiven Klebefilm wird durch Einwirkung von feuchtwarmem Klima beeinflusst. Es besteht daher die Aufgabe, einen Verbund zur Verfügung zu stellen mit zumindest einem Substrat, das auf der zu verklebenden Seite anorganischen (hydrophilen) Charakter aufweist (Glas, Keramik, Metall und entsprechend anorganisch (hydrophil) beschichtete Materialien, die selbst organischer Natur sein können), und mit einem latentreaktivem Klebefilm, der bei relativ geringen Temperaturen in einer Heißpresse schnell härtbar ist, so dass die Verklebungsfestigkeit des Verbunds weniger stark oder gar nicht durch die Einwirkung von feuchtwarmem Klima beeinträchtigt wird. Bei Elektronikgeräten und anderen Mobilgeräten wird zudem eine Schockbeständigkeit der Verklebungen gefordert.

### Erfindung

Es wurde gefunden, dass die erfindungsgemäße Aufgabe gelöst werden konnte, wenn bei der Verklebung von Substraten mit anorganischen Oberflächen die Kontaktflächen, die bei der Verklebung durch die anorganische Substratoberfläche und die Oberfläche des latentreaktiven Klebefilms entstehen, mit einem Silan enthaltenden Primer geprimert werden. Eine Primerung der Kontaktfläche meint die Primerung der entsprechenden Substratoberfläche oder der entsprechenden Klebefilmoberfläche oder beider Oberflächen. Werden mittels des latentreaktiven Klebefilms zwei Substrate miteinander verklebt, so sollte vorteilhaft zumindest die Kontaktfläche geprimert sein, die durch die anorganische Oberfläche und den Klebefilm gebildet wird. Sind die Oberflächen beider Substrate anorganisch, so ist es erfindungsgemäß vorteilhaft, zumindest eine der Kontaktflächen - Substratfläche, Klebfilmfläche oder Substrat- und Klebefilmfläche - zu primern, bevorzugt werden beide Kontaktflächen geprimert.

Die Erfindung betrifft insbesondere ein Verfahren zur Verklebung zweier Substrate, nämlich eines ersten Substrats A und eines zweiten Substrats B, miteinander mittels eines latentreaktiven Klebefilms mit mindestens einer latentreaktiven Klebefilmschicht, die eine thermoplastische Komponente, die eine Schmelztemperatur T(Schmelz) mit 35°C ≤ T(Schmelz) ≤ 90°C aufweist und funktionelle Gruppen enthält, die mit Isocyanat reagieren können, und eine Isocyanat-haltige Komponente, die partikulär in die thermoplastische Komponente eindispergiert vorliegt und blockiert, mikroverkapselt oder im Bereich der Partikeloberfläche im Wesentlichen desaktiviert ist, wobei die Partikel eine Anspringtemperatur T(Anspring) von 40°C ≤ T(Anspring) ≤ 120°C aufweisen und wobei T(Anspring) ≥ T(Schmelz) ist, wobei eine Oberfläche des ersten Substrats A mit einer ersten Oberfläche des latentreaktiven Klebefilms in Kontakt gebracht und wird, und wobei eine Oberfläche des zweiten Substrats B mit der zweiten Oberfläche des latentreaktiven Klebefilms in Kontakt gebracht wird, wobei die Verklebung bewirkt wird, indem der latentreaktive Klebefilm auf eine Temperatur erwärmt wird, die zumindest der Anspringtemperatur T(Anspring) entspricht oder höher ist, wobei weiterhin zumindest die Oberfläche des ersten Substrats A, die mit dem latentreaktiven Klebefilm in Kontakt gebracht wird, vor der Inkontaktbringung des ersten Substrats A mit dem latentreaktiven Klebefilm mit einem Primer behandelt wird, und/oder zumindest die erste Oberfläche des latentreaktiven Klebefilms, die mit dem ersten Substrat A in Kontakt gebracht wird, vor der Inkontaktbringung des ersten Substrats A mit dem latentreaktiven Klebefilm mit einem Primer behandelt wird, wobei als Primer für die Verklebung des ersten Substrats A mit dem latentreaktiven Klebefilm ein Silan enthaltender Primer eingesetzt wird, und wobei zumindest die Oberfläche des ersten Substrats A, die mit einer ersten Oberfläche des latentreaktiven Klebefilms in Kontakt gebracht wird, vollflächig oder teilflächig durch ein anorganisches Material gebildet ist.

Im Sinne dieser Beschreibung ist T(Schmelz) die Schmelztemperatur der thermoplastischen Komponente und T(Anspring) die Temperatur, bei der die Isocyanat-Gruppen der in die thermoplastische Komponente eindispergierten Partikel in die Lage versetzt werden, mit den funktionellen Gruppen des thermoplastischen Polyurethans zu reagieren (z. B. weil sie sich in der Matrix mit dem thermoplastischen Polyurethan verteilen). Im Falle blockierter Isocyanatgruppen ist T(Anspring) mit der Deblockierungstemperatur verknüpft, im Falle einer Mikroverkapselung mit dem Release von Isocyanat aus den Mikrokapseln (z. B. durch Schmelzen der Mikrokapselhülle) und im Falle der im Bereich der Oberfläche der Isocyanatpartikel desaktivierter Isocyanate mit einem Aufschmelzen der Isocyanatpartikel. Im Sinne dieser Erfindung sind alle nach dem Stand der Technik bekannten blockierten, mikroverkapselten bzw. im Bereich der Partikeloberfläche desaktivierten Isocyanat-haltigen Systeme denkbar, die die Angaben zu T(Anspring) erfüllen. Die thermoplastischen Polyurethane und die Isocyanat-haltige Komponente sind bevorzugt in wässrigem Medium dispergierbar bzw. in wässrigem Medium dispergiert.

Die Bestimmung von Schmelztemperaturen erfolgt mittels differentieller Scanning Kalorimetrie (DDK, DSC) nach DIN 53765-B-10 (1994).

Die Bestimmung von T(Anspring) erfolgt ebenfalls mittels differentieller Scanning Kalorimetrie (DDK, DSC). Dabei wird das exotherme Signal im Thermogramm der ersten Aufheizkurve bei einer Heizrate von 10 K/min ausgewertet, das der Reaktion der Isocyanatgruppen entspricht, ausgewertet. Als T(Anspring) wird die Onset-Temperatur dieses Signals verwendet. Insbesondere ist dabei zumindest die Oberfläche des ersten Substrats A, die mit einer ersten Oberfläche des latentreaktiven Klebefilms in Kontakt gebracht wird, zumindest überwiegend, aus einem anorganischen Material gebildet. Auch die zu verklebende Oberfläche des zweiten Substrats kann vollflächig oder teilflächig - insbesondere überwiegend - anorganisch sein. Dann ist es besonders bevorzugt, wenn beide Kontaktflächen geprimert werden.

Daher ist es gegebenenfalls vorteilhaft, wenn auch die Oberfläche des zweiten Substrats B, die mit dem latentreaktiven Klebefilm in Kontakt gebracht wird, vor der Inkontaktbringung des zweiten Substrats B mit dem latentreaktiven Klebefilm mit einem Primer behandelt wird, und/oder wenn auch die zweite Oberfläche des latentreaktiven Klebefilms, die mit dem zweiten Substrat B in Kontakt gebracht wird, vor der Inkontaktbringung des zweiten Substrats B mit dem latentreaktiven Klebefilm mit einem Primer behandelt wird, und zwar insbesondere vorteilhaft dann, wenn auch die Oberfläche des zweiten Substrats B, die mit dem latentreaktiven Klebefilm in Kontakt gebracht wird, vollflächig oder teilflächig anorganisch ist.

Die Erwärmung des latentreaktiven Klebefilms auf die Temperatur, die zumindest der Anspringtemperatur T(Anspring) entspricht oder höher ist, erfolgt bevorzugt in bezug auf einen Vorverbund, der aus dem Substrat A und dem Klebefilm geschaffen wurde, oder auf einen Vorverbund, der aus dem Substrat A, dem Klebefilm und dem Substrat B geschaffen wurde. Hierfür werden die entsprechenden Substrat- und Klebefilmflächen wie vorstehend dargestellt in Kontakt gebracht, gegebenenfalls können die Kontaktfläche aus der Oberfläche des Substrats A mit der Klebefilmfläche und/oder die Kontaktflächen aus der Oberfläche des Substrats B mit der Klebefilmfläche auch vorfixiert werden, etwa durch Wärmelamination (im Falle beidseitger Wärmelamination gleichzeitig oder nacheinander durchgeführt), Wärmeeinbringung in eine oder beide Kontaktflächen (in letzterem Fall gleichzeitig oder nicht gleichzeitig), oder dergleichen. Dabei sollte eine eventuell eingebrachte Wärme zur Vorfixierung jeweils soweit unter der Anspringtemperatur des latentreaktiven Klebefilms liegen, dass die schlussendliche - durch die Reaktion des Isocyanats mit den funktionellen Gruppen der thermoplastischen Komponente bewirkte - Verklebung noch nicht anspringt (initiiert wird).

Gegenstand der Erfindung ist auch ein Verbund aus zumindest einem Substrat A und einem latentreaktiven Klebefilm, insbesondere aus zwei Substraten A und B und einem latentreaktiven Klebefilm, wie er durch das erfindungsgemäße Verfahren erhältlich ist und insbesondere gemäß der vorstehenden und nachfolgenden Ausführungen zu dem Verfahren oder zu dem Verbund selbst.

Gegenstand der Erfindung ist insbesondere weiter ein Verbund gemäß der vorstehenden Ausführungen aus zwei mittels eines Klebefilm miteinander verklebten Substraten, wobei der Klebefilm das Reaktionsprodukt einer Dispersion aus einer thermoplastischen Komponente enthaltend funktionelle Gruppen, die mit Isocyanat reagieren können, und aus einer partikulär in die thermoplastische Komponente eindispergierten Isocyanat-haltigen Komponente, wobei in der Kontaktfläche zwischen zumindest einem der verklebten Substrate und dem Klebefilm ein Primer vorgesehen ist. Primer liegen im Verbund üblicherweise in getrockneter Form vor. Die Wirkung eines Primers beruht häufig auf einer Wechselwirkung (siehe hierzu die näheren Ausführungen in dieser Schrift, beispielweise können solche Wechselwirkungen auch chemische Reaktionen sein) des Primers mit der betreffenden Substratoberfläche, der betreffenden Klebefilmoberfläche oder mit der Substrat- und der Klebefilmoberfläche. Sofern im Rahmen dieser Schrift davon gesprochen wird, dass in einem - in der Regel dann verklebten - Verbund ein Primer vorgesehen ist, umfasst der Begriff des Primers insbesondere auch getrocknete Primer und solche Primer, die derartige Wechselwirkungen eingegangen sind.

Mit der Erfindung kann die Beständigkeit von Verbunden aus einem Substrat A und einem latentreaktiven Klebefilm beziehungsweise aus einem Substrat A, einem latentreaktiven Klebefilm und einem Substrat B gemäß der vorstehenden Ausführungen nach Feucht-Wärme-Lagerung signifikant verbessert werden. Gegenstand der Erfindung ist daher auch ein Verbund aus zwei mittels eines Klebefilms miteinander verklebten Substraten A und B, wobei der Klebefilm das Reaktionsprodukt einer Dispersion aus einer thermoplastischen Komponente enthaltend funktionelle Gruppen, die mit Isocyanat reagieren können, und aus einer partikulär in die thermoplastische Komponente eindispergierten Isocyanat-haltigen Komponente, wobei
die mittels einer Zugprüfmaschine im Push-Out-Test ermittelte Verklebungsfestigkeit nach einer Lagerung des Verbundes für 72 Stunden in einer Umgebung bei 60 °C und 90 % relativer Feuchtigkeit (Feucht-Wärme-Lagerung) und anschließender Lagerung für 1 Tag bei 23 °C und 50 % relativer Feuchtigkeit mindestens 50 %, bevorzugt mindestens 70 %, sehr bevorzugt mindestens 90 % der Verklebungsfestigkeit beträgt, die für einen identischen Verbund ermittelt wird, der nach seiner Herstellung ausschließlich bei 23 °C und 50 % relativer Feuchtigkeit gelagert wird, und/oder
die mittels einer Zugprüfmaschine im Push-Out-Test ermittelte Verklebungsfestigkeit nach einer Lagerung des Verbundes für 72 Stunden in einer Umgebung bei 85 °C und 85 % relativer Feuchtigkeit (Feucht-Wärme-Lagerung) und anschließender Lagerung für 1 Tag bei 23 °C und 50 % relativer Feuchtigkeit mindestens 50 %, bevorzugt mindestens 70 %, sehr bevorzugt mindestens 90 % der Verklebungsfestigkeit beträgt, die für einen identischen Verbund ermittelt wird, der nach seiner Herstellung ausschließlich bei 23 °C und 50 % relativer Feuchtigkeit gelagert wird,
wobei die Messung gemäß der im Rahmen dieser Schrift angegebenen Versuche (siehe experimenteller Teil, Prüfmethoden "Test (A)" und "Test( C)") durchgeführt wurde und die insbesondere auf Untersuchungsmuster mit jeweiligen Klebeflächen von 91,9 mm² bezogen sind. Verbunde mit den vorgenannten Feucht-Wärme-Beständigkeiten sind insbesondere solche, wie sie durch das erfindungsgemäße Verfahren erhältlich sind und insbesondere gemäß der vorstehenden und nachfolgenden Ausführungen zu dem Verfahren oder zu dem Verbund selbst.

In bevorzugter Weise erfüllt der erfindungsgemäße Verbund die Anforderungen an die Schockbeständigkeit, bestimmt über den Ball-Drop-Test, siehe Prüfmethoden, Test (B). Dabei wird die Fallhöhe registriert, bei der eine auf den Klebeverbund unter definierten Bedingungen fallende und auftreffende Stahlkugel (Masse 5,6 g; Verklebungsfläche 360 mm²) den Verbund nicht löst. Der Test gilt als bestanden, wenn der Verbund einen Fall der Kugel aus einer Höhe von mindestens 175 cm oder mehr, bevorzugt mindestens 200 cm oder mehr, sehr bevorzugt mindestens 225 cm oder mehr übersteht.

Gegenstand der Erfindung ist weiter ein Verbund aus zwei mittels eines Klebefilms miteinander verklebten Substraten, der durch das erfindungsgemäße Verfahren erhältlich ist, wobei der Klebefilm das Reaktionsprodukt einer Dispersion aus einer thermoplastischen Komponente enthaltend funktionelle Gruppen, die mit Isocyanat reagieren können, und aus einer partikulär in die thermoplastische Komponente eindispergierten Isocyanat-haltigen Komponente - insbesondere ein solcher Verbund, der die vorgenannten Feucht-Wärme-Beständigkeiten (bei 60 °C / 90 % r.F. und/oder bei 85 °C / 85 % r.F.) aufweist und/oder das Auftreffen einer Stahlkugel (Masse 5,6 g) aus 175 cm oder mehr im Ball-Drop-Test übersteht und der durch das erfindungsgemäße Verfahren erhältlich ist - wobei der Verbund Bestandteil eines optischen, elektronischen und/oder feinmechanischen Geräts ist, insbesondere eines transportablen optischen, elektronischen oder feinmechanischen Geräts, oder bei der Herstellung eines solche Geräts eingesetzt wird.

Eine vorteilhafte Ausführung der Erfindung ist ein Verbund, der durch das erfindungsgemäße Verfahren erhältlich ist, insbesondere zur Verwendung für optische, elektronische und/oder feinmechanische Geräte, bestehend aus einem ersten Substrat, einem zweiten Substrat und einem latentreaktiven Klebefilm, wobei
- der latentreaktive Klebefilm mindestens eine latentreaktive Klebefilmschicht, die eine thermoplastische Komponente, die eine Schmelztemperatur (als getrockneter Film) T(Schmelz) mit 35°C ≤ T(Schmelz) ≤ 90°C aufweist und funktionelle Gruppen enthält, die mit Isocyanat reagieren können, und eine Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist, wobei die Partikel eine Anspringtemperatur T(Anspring) von 40°C ≤ T(Anspring) ≤ 120°C aufweisen, enthält,
- bevorzugt jede der mit dem latentreaktivem Klebefilm zu verklebende anorganische (hydrophile) Substratoberfläche und/oder die entsprechende, mit dieser anorganischen Substratoberfläche in Kontakt gebrachte Oberfläche des Klebefilms mit einem Primer versehen ist.

Dieser Verbund erfüllt die Anforderung, dass die Verklebungsfestigkeit des Verbunds weniger stark oder gar nicht durch die Einwirkung von feuchtwarmem Klima beeinträchtigt wird. Der Verbund weist eine Verklebungsfestigkeit (nach Test A) vor Feucht-/Wärme-Lagerung (nach Test C) von mindestens 3 N/mm² auf. Die Verklebungsfestigkeit nach Feucht-/Wärme-Lagerung (nach Test C) liegt im Vergleich zu einem nicht feuchtwarm gelagerten Referenzverbund (Verklebungsfestigkeit = 100 %) bei mindestens 50 %, bevorzugt bei mindestens 70 %, sehr bevorzugt bei mindestens 90 %. Darüber hinaus erfüllt dieser Verbund bevorzugt auch die Anforderungen an die Schockbeständigkeit (bestimmt über den Ball Drop, Test B) mit mindestens 175 cm.

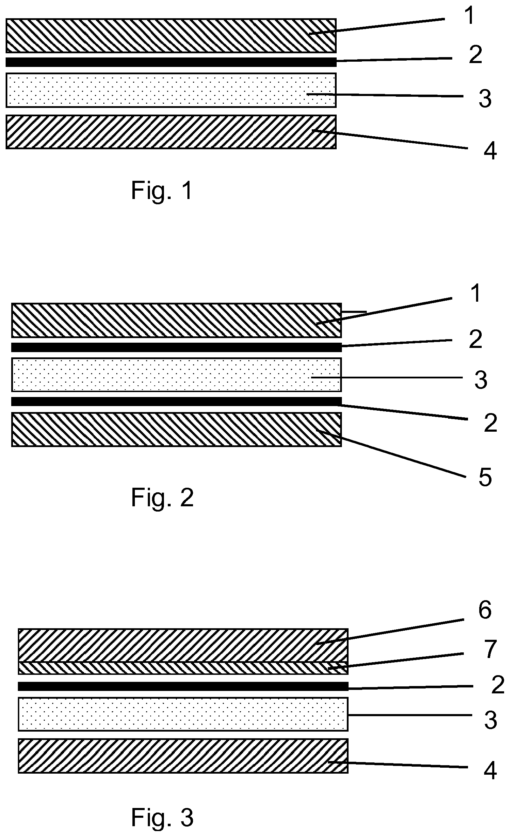

Beispiele für erfindungsgemäße Verbunde sind in den Figuren 1, 2 und 3 dargestellt. Dabei bedeuten:
1 Substrat A, insbesondere anorganisches Material
2 Primer
3 Latentreaktiver Klebefilm
4 Substrat B, insbesondere organisches Material
5 Substrat B, insbesondere anorganisches Material
6 Substrat A, insbesondere anorganisches Material, mit
7 anorganisch modifizierter Oberfläche des Materials A (6)

### Latentreaktive Klebefilme

Die latentreaktiven Klebefilme enthalten eine thermoplastische Komponente, die eine Schmelztemperatur, T(Schmelz), aufweist und funktionelle Gruppen enthält, die mit Isocyanat reagieren können, sowie eine Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist. Feinteilig partikulär bedeutet dabei mit einer Partikelgrößenverteilung mit d₅₀ < 50 µm, wobei die Partikelgrößenverteilung vorzugsweise < 15 µm ist. Latentreaktive Klebefilme basieren vorzugsweise auf sogenannten 1K latentreaktivem Polyurethan, erhalten aus wässriger Polyurethan-Dispersion, bevorzugt Dispercoll U^{®} der Fa. Bayer AG; dabei ist die Isocyanat-haltige Komponente eine solche, die im Bereich der Partikeloberfläche im Wesentlichen desaktiviert ist.

Die Partikel weisen eine Anspringtemperatur, T(Anspring), auf, für die gilt T(Schmelz) ≤ T(Anspring). T(Schmelz) liegt zwischen 35 °C und 90 °C, bevorzugt zwischen 40 °C und 60 °C. T(Anspring) liegt zwischen 40 °C und 120 °C, bevorzugt bei höchstens 100 °C, ganz besonders bevorzugt bei höchstens 90 °C. Als Untergrenze ist 50 °C bevorzugt und 60 °C besonders bevorzugt. Die latentreaktiven Klebefilme sind bei Raumtemperatur nicht haftklebrig, so dass eine gute (Re-)Positionierbarkeit gewährleistet wird, bevor thermisch initiiert und der Aufbau der Klebfestigkeit der Verklebung gestartet wird.

Besonders bevorzugt ist T(Schmelz) < T(Anspring), da so ein ungewolltes Auslösen der Vernetzungsreaktion bei der Herstellung des bahnförmigen latentreaktiven Klebefilms sicher vermieden werden kann.

Als thermoplastische Komponente kommen vorzugsweise solche Verbindungen zum Einsatz, die mit OH- und/oder NH₂-Gruppen funktionalisiert sind. Sehr bevorzugt handelt es sich bei der thermoplastischen Komponente um zumindest ein semikristallines Polyesterpolyurethan.

Der latentreaktive Klebefilm enthält dabei bevorzugt eine anionische, hochmolekulare Polyurethan-Dispersion als thermoplastische Komponente, die eine Schmelztemperatur (in getrockneter Form) T(Schmelz) mit 35°C ≤ T(Schmelz) ≤ 90°C, insbesondere 40°C ≤ T(Schmelz) ≤ 60°C, aufweist und funktionelle Gruppen enthält, die mit Isocyanat reagieren können, beispielweise in Form kommerziell erhältlicher Produkte aus der oben erwähnten Dispercoll U-Familie; wie Dispercoll U53, Dispercoll U54, Dispercoll U56, Dispercoll U 8755, Dispercoll U XP 2815, Dispercoll VP KA 8758, Dispercoll U XP 2682, Dispercoll U 2824 XP, Dispercoll U XP 2701, Dispercoll U XP 2702, Dispercoll U XP 2710 und/oder Dispercoll BL XP 2578 (Dispercoll ist eine eingetragene Marke der Bayer AG).

Der latentreaktive Klebefilm enthält dabei zudem bevorzugt Toluylen-diisocyanat-Verbindungen (TDI-Verbindungen), wie Dispercoll BL XP 2514 (TDI-Dimer) und/oder Aqualink U (Dispersion von blockiertem TDI-Dimer) und/oder Isophoron-Diisocyanate (IPDI), wie Aqualink D (Dispersion von blockiertem IPDI-Trimer) als Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist. Eingesetzt werden die Diisocyanate beispielsweise in Form der wässrigen Suspensionen des jeweiligen latent-reaktiven Feststoff-Isocyanats. Aqualink wird von der Fa. Aquaspersions angeboten. Insbesondere in Kombination mit anionischen, hochmolekularen Polyurethan-Dispersionen als thermoplastischer Komponente (wie die genannten Dispercoll U-Produkte) können die vorgenannten Diisocyanat-Produkte als Vernetzer-Komponente verwendet werden. Andere Isocyanate, auch monomere und oligomere Verbindungen sowie Polyisocyanate, sind einsetzbar.

Der latentreaktive Klebefilm kann darüber hinaus weitere Formulierungsbestandteile enthalten. Dazu zählen Verdicker, Netzmittel, Entschäumer, Füllstoffe (z. B. thermisch leitende), Pigmente (beinhaltend Mittel zur Färbung, Weißgradeinstellung und/oder Schwärzung), Katalysatoren, Stabilisatoren, Alterungsschutzmittel, Lichtschutzmittel und weitere Polymere zur Einstellung spezieller Klebeeigenschaften. Spezielle Klebeeigenschaften lassen sich beispielsweise durch Zumischen wässriger Dispersionen amorpher Polymere (z. B. Polyetherurethane oder Polyacrylate) und/oder durch Zumischen wässriger Harzdispersionen (insbesondere basierend auf Kolophoniumestern) oder flüssiger Harze einstellen.

Bei dem erfindungsgemäßen Verbund kommt ein latentreaktiver Klebefilm mit zumindest einer Schicht einer latentreaktiven Klebeformulierung zum Einsatz mit einer Schichtdicke zwischen zumindest 10 µm und höchstens 500 µm, bevorzugt zwischen zumindest 20 µm und höchstens 250 µm.

Bei den latentreaktiven Klebefilmen handelt es sich um doppelseitig klebende Produkte. Solche Produkte enthaltend zumindest eine latentreaktive Klebefilmschicht kommen im einfachsten Fall in einschichtiger Form zum Einsatz (so dass die latentreaktive Klebefilmschicht und der latentreaktive Klebefilm identisch sind), aufgebracht auf ein wieder ablösbares (temporäres) Trägermaterial. Als temporäres Trägermaterial bieten sich alle Trennfolien und -papiere an, die aus dem Stand der Technik bekannt sind und ein- oder beidseitig mit einer Trennschicht ausgerüstet sind. Silikonisierte Papiere werden bevorzugt. Papiere können auch ein- oder beidseitig mit Polyethylen oder Polypropylen beschichtet sein. Es können auch zwei Lagen eines wiederablösbaren Trägermaterials zum Einsatz kommen, so dass Ober- und Unterseite des Klebefilms abgedeckt sind, auch wenn das Produkt nicht aufgewickelt vorliegt. Ein temporäres Trägermaterial ist nicht Teil des verklebten Verbunds. Es wird vor Verklebung der Substrate vom latentreaktivem Klebefilm entfernt.

Latentreaktive Klebefilme enthaltend zumindest eine latentreaktive Klebefilmschicht können zudem ein weiteres Trägermaterial enthalten, das auch nach Verklebung Teil des Verbunds ist (Permanentträger). Hierzu bieten sich ebenfalls Folien und Papiere aber auch Gelege, Gewebe und Gewirke an. Die Oberflächen dieser Trägermaterialien können jeweils unabhängig voneinander chemisch (Primer, Plasma) und/oder physikalisch (Corona, Flamme, Plasma) so vorbehandelt sein, dass eine besonders gute Verankerung der latentreaktiven Klebefilmschicht auf dem Trägermaterial erreicht werden kann. Vliese werden bevorzugt. Eine Lage eines Permanentträgers reduziert eine etwaige Neigung der Klebefilmschicht, im geschmolzenen Zustand unter Verpressbedingungen seitlich aus der Verklebungsfuge ausgequetscht zu werden (siehe hierzu DE 10 2009 006 935 A1).

Als Trägervlies werden in diesem bevorzugten Fall Flächengebilde aus einzelnen Fasern eingesetzt. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie z.B. Glas, Mineralwolle oder Basalt, tierische Fasern, wie z.B. Seide oder Wolle, pflanzliche Fasern, wie z.B. Baumwolle, Zellulose, chemische Fasern, wie z.B. Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Das Flächengewicht der Vliese beträgt bevorzugt zwischen 4 und 100 g/m², besonders bevorzugt zwischen 10 und 70 g/m². Solche Vliese sind z.B. kommerziell von der Firma Glatfelter erhältlich. Die Dicke dieser Vliese beträgt bevorzugt zwischen 20 und 100 µm, äußerst bevorzugt zwischen 30 und 60 µm.

Latentreaktive Klebefilme mit Permanentträger können auf der Ober- und Unterseite verschieden dicke latentreaktive Klebefilmschichten und/oder bevorzugt latentreaktive Klebefilmschichten unterschiedlicher Art tragen. Kommen verschiedene latentreaktive Klebefilmschichten zum Einsatz dann erfüllen insbesondere beide die Anforderungen an die latentreaktiven Klebeformulierungen, wie sie oben ausgeführt sind.

Latentreaktive Klebefilme enthaltend zumindest eine latentreaktive Klebefilmschicht können auch in zwei- oder mehrschichtiger und permanentträgerfreier Form zum Einsatz kommen. Bevorzugt die oberste und sehr bevorzugt auch die unterste Schicht sind eine Schicht aus latentreaktiver Klebeformulierung, wobei diese verschieden im Hinblick auf Dicke und/oder Art sein können. Kommen verschiedene latentreaktive Klebefilmschichten zum Einsatz dann erfüllen insbesondere beide die Anforderungen an die latentreaktiven Klebeformulierungen, wie sie oben ausgeführt sind.

Bei mehrschichtigen latentreaktiven Klebefilmen mit oder ohne Permanentträger sind prinzipiell auch solche Ausführungen möglich, die auf der Oberseite die latentreaktive Klebefilmschicht aufweisen und auf der Unterseite eine Schicht eines anderen Klebers, wie beispielsweise einer Haftklebemasse oder eines Schmelzklebers.

Mehrschichtige und permanentträgerhaltige latentreaktive Klebefilme können Dicken von 50 µm bis 1000 µm, bevorzugt von 75 µm bis 300 µm aufweisen.

Der latentreaktive Klebefilm kann bahnförmig als Rollenware, als Blattware oder als Stanzling konfektioniert sein und so zum Aufbau des Verbunds genutzt werden. Die latentreaktiven Klebefilme sind bevorzugt bei Raumtemperatur nicht haftklebrig, da das Material so sehr vorteilhaft auch ohne temporären Träger konfektioniert (z. B. gestanzt) und für den Weiterverarbeitungsprozess zur Verfügung gestellt werden kann. Eine haftklebrige Ausgestaltung ist jedoch auch denkbar und vorteilhaft.

### Zu verklebende Substrate

In dem erfindungsgemäßen Verbund sind insbesondere zwei Substrate (Substrat A und Substrat B) mittels eines latentreaktiven Klebefilms der obigen Definition miteinander verklebt.

In dem erfindungsgemäßen Verfahren werden zwei Substrate (Substrat A und Substrat B) insbesondere mittels eines latentreaktiven Klebefilm verklebt, wie er im Rahmen dieser Schrift näher beschrieben ist.

Zumindest Substrat A und ggf. auch Substrat B weist an der mit dem latentreaktiven Klebefilm zu versehenen Oberfläche einen anorganischen (hydrophilen) Charakter auf und wird mit einem Silan enthaltenden Primer versehen, bevor die Oberfläche mit dem latentreaktiven Film versehen wird. Bei der Vorbehandlung des zu verklebenden Substrats durch Primerauftrag wird gezielt die Zieloberfläche modifiziert mit höchstmöglicher Effizienz der Wirksubstanz. Alternativ oder zusätzlich können auch eine oder beide der Oberflächen des latentreaktiven Klebefilms mit einem Primer versehen sein.

### Substrate A

Für Fenster- und Displayanwendungen in Elektronik- und Mobilgeräten kommen als Substrate A verstärkt Gläser zum Einsatz. Diese können beispielsweise aus Mineralglas, Quarzglas oder Saphirglas gefertigt werden. Durch diverse Modifikationen können die optischen, sowie physikalischen Eigenschaften der Gläser gezielt beeinflusst werden. Aus dekorativen Gründen werden beispielsweise Rauchgläser oder eingefärbte Gläser eingesetzt. Mit Oberflächenbeschichtungen oder Lackierungen, die beispielsweise mittels Sprühauftrag oder über einen Gasphasenabscheidungsprozess aufgebracht werden können, kann man ebenfalls das optische Erscheinungsbild gezielt beeinflussen. Zudem sind Anti-Reflex-Schichten, kratzresistente Beschichtungen und andere funktionelle Oberflächenbeschichtungen gängig. Die Gläser liegen in ihrer einfachsten Form planar als Flachglas vor, können aber auch zu dreidimensionalen Fenstern oder Bauteilen gegossen werden.

Weitere zu verklebende Materialien für Substrate A können metallisch sein oder eine metallische Oberfläche aufweisen. Solche metallischen Bauteile können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und austenitische Legierungen zum Einsatz. Additivierungen und Legierungen jeglicher Art sind ebenfalls gängig. Zudem können die Bauteile mehrlagig aus unterschiedlichen Metallen aufgebaut sein. Aus optischen Gründen und zur Verbesserung der Oberflächeneigenschaften und -qualität werden an den Metallbauteilen häufig Oberflächenmodifizierungen vorgenommen. So kommen beispielsweise häufig gebürstete Aluminium- und Edelstahlbauteile zum Einsatz. Als Metallisierungen kommen neben Chromatierungen auch Beschichtungen mit zum Beispiel Gold oder Silber zur Passivierung zum Einsatz. Die Metallteile können die unterschiedlichsten Formen und Grössen einnehmen und flach oder dreidimensional geformt sein. Weiterhin können auch die Funktionen sehr unterschiedlich sein und reichen von Dekorationselementen zu Versteifungsträgern, Rahmenbauteilen, Abdeckungen, etc.

Für Aluminium und Magnesium sind Anodisierungen (Eloxierung) gängig, die häufig mit farbgebenden Prozessen kombiniert werden. Die zu verklebende Oberfläche weist dann einen keramischen Charakter auf.

Bei Materialien für Substrate A kann es sich zudem um nicht anorganische, also organische Materialien wie Kunststoffe handeln, die an der mit dem latentreaktivem Klebefilm verklebten bzw. zu verklebenden Oberfläche anorganisch (hydrophil) modifiziert sind. Handelt es sich bei dem Material von Substrat A um Kunststoff, dann basieren die Kunststoffteile für Konsumgüterelektronikbauteile oder andere Mobilgeräte bevorzugt auf Kunststoffen, die im Spritzguss verarbeitet werden können. So umfassen diese Gruppe z.B. ABS, PC, ABS/PC Blends, PMMA, Polyamide, glasfaserverstärkte Polyamide, Polyvinylchlorid, Polyvinylenfluorid, Cellulose Acetat, Cycloolefin Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester Styrol-Acrylnitril Copolymere, Polyethylen, Polystyrol, Polypropylen oder Polyester (z.B. PBT, PET). Die Aufzählung besitzt keinen Anspruch auf Vollständigkeit. Sehr bevorzugt handelt es sich bei den verwendeten Kunststoffen um Polycarbonat, Polyamid, PMMA oder ABS. Die Oberflächenmodifikation weist in diesen Fällen eine Beschichtung mit anorganischem (hydrophilem) Material auf wie z. B. Metall oder Keramik (insbesondere Oxide oder durch Sol/Gel-Verfahren erzeugte Schichten). Als solche Oberflächenmodifikationen sind Oberflächenbeschichtungen, die mittels Physikalischer Gasphasenabscheidung (PVD) oder Chemischer Gasphasenabscheidung (CVD) aufgebracht werden, gängig.

### Substrate B

Für Substrate B können dieselben Definitionen gelten, wie für Substrate A ausgeführt. Die mit dem latentreaktiven Klebefilm zu verklebende Oberfläche von Substrat B kann jedoch auch einen nicht anorganischen (hydrophilen) Charakter aufweisen, also organischer Natur sein wie z. B. aus Kunststoff bestehen. Handelt es sich bei dem Material von Substrat B um Kunststoff, dann basieren die Kunststoffteile für Konsumgüterelektronikbauteile oder andere Mobilgeräte bevorzugt auf Kunststoffen, die im Spritzguss verarbeitet werden können. So umfassen diese Gruppe z.B. ABS, PC, ABS/PC Blends, PMMA, Polyamide, glasfaserverstärkte Polyamide, Polyvinylchlorid, Polyvinylenfluorid, Cellulose Acetat, Cycloolefin Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester Styrol-Acrylnitril Copolymere, Polyethylen, Polystyrol, Polypropylen oder Polyester (z.B. PBT, PET). Die Aufzählung besitzt keinen Anspruch auf Vollständigkeit. Die Bauteile können jede beliebige Form annehmen, die für die Herstellung eines Bauteils oder Gehäuses für Konsumgüterelektronikartikel erforderlich ist. In der einfachsten Form sind sie planar. Weiterhin sind aber auch 3-dimensionale Bauteile durchaus üblich. Die Bauteile können die verschiedensten Funktionen einnehmen, wie z.B. Gehäuse, Sichtfenster oder Versteifungselement. Sehr bevorzugt handelt es sich bei den verwendeten Kunststoffen um Polycarbonat, Polyamid, PMMA oder ABS.

Die Bauteile für Substrate B, insbesondere Kunststoffteile können lackiert oder anderweitig beschichtet sein. Lacke, die zur Oberflächenfunktionalisierung /-modifizierung von u. a. Kunststoffen eingesetzt werden, sind z. B. Antireflex-Beschichtungen, Anti-Fingerprint-Beschichtungen, Antikratz-Beschichtungen oder dekorative Bedruckungen (sog. Backprints). Ferner können die Bauteile, insbesondere die Kunststoffbauteile auch mit (anorganischen) Schichten ausgestattet sein wie z. B. leitfähigen Schichten. Hier sei insbesondere Indium-ZinnOxid als leitfähige Schicht genannt. Diese Lacke und Schichten weisen zum Teil Thermosensibilität auf und machen daher selbst bereits die Verwendung von bei niedriger Temperatur verarbeitbaren Klebeprodukten erforderlich.

Die Bauteile, seien sie aus Glas, Metall, Keramik oder Kunststoff mit anorganischer (hydrophiler) Oberfläche, können jede beliebige Form annehmen, die für die Herstellung eines Bauteils oder Gehäuses für Konsumgüterelektronikartikel erforderlich ist. In der einfachsten Form sind sie planar. Weiterhin sind aber auch 3-dimensionale Bauteile durchaus üblich. Die Bauteile können die verschiedensten Funktionen einnehmen, wie z.B. Gehäuse, Sichtfenster oder Versteifungselement.

### Primer

Im Sinne dieser Erfindung kommt ein Primer zum Einsatz, der zu deutlicher Stabilisierung der Verbundfestigkeit unter Feucht-/Wärme-Einfluss führt. Erfindungsgemäße Verbunde weisen insbesondere zumindest ein Substrat auf, das an der mit dem latentreaktiven Klebefilm, wie er im Rahmen dieser Schrift beschrieben ist, versehenen Oberfläche eine anorganische (hydrophile) Oberfläche aufweist. Diese Oberfläche und/oder die mit dieser Oberfläche in Kontakt zu bringende bzw. gebrachte Oberfläche des Klebefilms ist mit dem Primer versehen. Bei den erfindungsgemäßen Verfahren zur Verklebung zweier Substrate mit einem erfindungsgemäßen latentreaktiven Klebefilm, wobei zumindest eines der Substrate auf der zu verklebenden Seite eine anorganische (hydrophile) Oberfläche ausweist, wird die zumindest eine zu verklebende anorganische (hydrophile) Oberfläche mit dem Primer und/oder die mit dieser in Kontakt zu bringende bzw. gebrachte Klebefilmoberfläche versehen und ggf. getrocknet, bevor die Verklebung mit dem latentreaktiven Klebefilm vorgenommen wird. Der Primer enthält zumindest ein Silan.

In weiter bevorzugter Vorgehensweise ist zumindest eine Oberfläche des latentreaktiven Klebefilms mit einem Primer versehen und ggf. getrocknet, bevor die Substrate miteinander verklebt werden.

Zwei Klassen an Silanen können im Sinne dieser Erfindung für die sehr bevorzugten Primer auf Silan-Basis unterschieden werden, zum einen solche, die neben den Gruppen, die zu einer Reaktion mit der anorganischen (hydrophilen) Substratoberfläche befähigt sind, ausschließlich organische Reste tragen, die chemisch inert sind (siehe Struktur I), zum anderen solche, die neben den Gruppen, die zu einer Reaktion mit der anorganischen (hydrophilen) Substratoberfläche befähigt sind, zumindest einen organischen Rest enthalten, der zumindest eine Gruppe X trägt, die eine Verbindung mit zumindest einer funktionellen Gruppe, die in der Formulierung des latentreaktiven Klebefilms nach der obigen Definition enthalten ist, eingehen kann (siehe Struktur II). Bevorzugt enthält der Primer zumindest ein Silan der Struktur II. In Silanen der Stuktur I stellt zumindest einer der Substituenten A, B, D eine hydrolysierbare Gruppe dar, also zum Beispiel ein Chlor-Atom oder insbesondere eine Alkoxygruppe. Zumindest einer der Substituenten B, C, D stellt einen organischen Rest dar, der aus einem linearen, verzweigten oder ringförmigen Kohlenwasserstoff besteht, der auch aromatisch sein kann und niedermolekularer, oligomerer oder polymerer Natur. Ist mehr als eine hydrolysierbare Gruppe unter den Substituenten A, B, D vorhanden, dann können diese gleicher oder verschiedener chemischer Natur sein, wobei alle der obigen Definition für hydrolysierbare Gruppen entsprechen. Ist mehr als ein organischer Rest unter den Substituenten B, C, D, dann können diese ebenfalls gleicher oder verschiedener chemischer Natur sein, wobei alle der obigen Definition für organische Reste entsprechen.

In Silanen der Struktur II stellt zumindest einer der Substituenten A, E, F eine hydrolysierbare Gruppe dar, also zum Beispiel ein Chlor-Atom oder insbesondere eine Alkoxygruppe. Zumindest einer der Substituenten E, F, G stellt einen organischen Rest dar, der aus einem linearen, verzweigten oder ringförmigen Kohlenwasserstoff besteht, der auch aromatisch sein kann und niedermolekularer, oligomerer oder polymerer Natur und der zusätzlich zumindest eine Gruppe X enthält, die eine Verbindung mit zumindest einer funktionellen Gruppe, die in der Formulierung des latentreaktiven Klebefilms nach der obigen Definition enthalten ist, eingehen kann. Ist mehr als eine hydrolysierbare Gruppe unter den Substituenten A, E, F vorhanden, dann können diese gleicher oder verschiedener chemischer Natur sein. Ist mehr als ein organischer Rest unter den Substituenten E, F, G vorhanden, dann können diese ebenfalls gleicher oder verschiedener chemischer Natur sein, wobei alle der obigen Definition für organische Reste entsprechen.

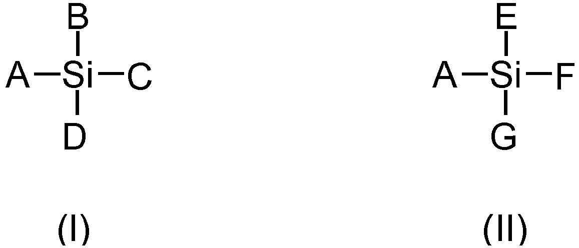

Vorteilhafte Auslegungen erfindungsgemäß einsetzbarer Silane der Struktur I sind solche, bei denen lediglich A als hydrolysierbare Gruppe zum Einsatz kommt und B, C, D organische Reste sind, von denen B und D gleicher chemischer Natur und C anderer chemischer Natur ist. Weitere vorteilhafte Ausgestaltungen erfindungsgemäß einsetzbarer Silane der Struktur I sind solche, bei denen A und B als hydrolysierbare Gruppen gleicher chemischer Natur zum Einsatz kommen und C und D organische Reste sind, die gleicher chemischer Natur sind. Weitere vorteilhafte Ausgestaltungen erfindungsgemäß einsetzbarer Silane der Struktur I sind solche, bei denen A, B, D als hydrolysierbare Gruppen gleicher chemischer Natur zum Einsatz kommen und C ein organischer Rest ist.

Vorteilhafte Ausgestaltungen erfindungsgemäß einsetzbarer Silane der Struktur II sind solche, bei denen lediglich A als hydrolysierbare Gruppe zum Einsatz kommt und E, F, G organische Reste sind, von denen E und F gleicher chemischer Natur sind und G anderer chemischer Natur ist. G enthält die zumindest eine Gruppe X, die eine Verbindung mit zumindest einer funktionellen Gruppe, die in der Formulierung des latentreaktiven Klebefilms nach der obigen Definition enthalten ist, eingehen kann. Weitere vorteilhafte Ausgestaltungen erfindungsgemäß einsetzbarer Silane der Struktur II sind solche, bei denen A, E, F als hydrolysierbare Gruppen gleicher chemischer Natur zum Einsatz kommen und G ein organischer Rest ist, der die zumindest eine Gruppe X, die eine Verbindung mit zumindest einer funktionellen Gruppe, die in der Formulierung des latentreaktiven Klebefilms nach der obigen Definition enthalten ist, eingehen kann.

Hydrolysierbare Gruppen A, B, D, E, F, die in Silanen I und Silanen II vorteilhaft zum Einsatz kommen können, sind Halogen-Atome, insbesondere Chlor, und/oder und sehr bevorzugt ausschließlich Alkoxy-Gruppen, wie beispielsweise Methoxy-, Ethoxy-, n-Propoxy-, iso-Propoxy-, n-Butoxy-, sec-Butoxy- oder tert-Butoxy-Gruppen. Ferner sind Acetoxy-Gruppen einsetzbar. Die weiteren, dem Fachmann bekannten Beispiele für hydrolysierbare Gruppen sind im Sinne dieser Erfindung ebenfalls einsetzbar.

Zu den organischen Resten B, C, D, E, F, die in Silanen I und Silanen II zum Einsatz kommen können, zählen beispielsweise, ohne Anspruch auf Vollständigkeit zu erheben, Methyl-, Ethyl-, n-Propyl-, iso-Propyl-, n-Butyl-, sec-Butyl-, tert-Butyl-Gruppen, Pentyl-Gruppen sowie die verzweigten Isomere, Hexyl-Gruppen sowie die verzweigten Isomere, Heptyl-Gruppen sowie die verzweigten Isomere, Octyl-Gruppen sowie die verzweigten Isomere, Nonyl-Gruppen sowie die verzweigten Isomere, Decyl-Gruppen sowie die verzweigten Isomere, Undecyl-Gruppen sowie die verzweigten Isomere, Dodecyl-Gruppen sowie die verzweigten Isomere, Tetradecyl-Gruppen sowie die verzweigten Isomere, Hexadecyl-Gruppen sowie die verzweigten Isomere, Octadecyl-Gruppen sowie die verzweigten Isomere sowie Eicosyl-Gruppen sowie die verzweigten Isomere. Die erfindungsgemäßen organischen Reste können zudem ringförmige und/oder aromatische Bauelemente enthalten. Repräsentative Strukturen sind Cyclohexyl-, Phenyl- und Benzyl-Gruppen. Es ist ferner erfindungsgemäß, wenn als zumindest ein organischer Rest Oligomere oder Polymere eingesetzt werden, die zumindest eine hydrolysierbare Silyl-Gruppe enthalten.

Zu den organischen Resten E, F, G, in dem zumindest eine Gruppe X, die eine Verbindung mit zumindest einer funktionellen Gruppe, die in der Formulierung des latentreaktiven Klebefilms nach der obigen Definition enthalten ist, eingehen kann, enthalten ist, zählen beispielsweise die in der folgenden Liste zusammengestellten Verbindungen (die Liste erhebt keinen Anspruch auf Vollständigkeit): Methyl, Ethyl-, n-Propyl-, iso-Propyl-, n-Butyl-, sec-Butyl-, tert-Butyl-Gruppen, Pentyl-Gruppen sowie die verzweigten Isomere, Hexyl-Gruppen sowie die verzweigten Isomere, Heptyl-Gruppen sowie die verzweigten Isomere, Octyl-Gruppen sowie die verzweigten Isomere, Nonyl-Gruppen sowie die verzweigten Isomere, Decyl-Gruppen sowie die verzweigten Isomere, Undecyl-Gruppen sowie die verzweigten Isomere, Dodecyl-Gruppen sowie die verzweigten Isomere, Tetradecyl-Gruppen sowie die verzweigten Isomere, Hexadecyl-Gruppen sowie die verzweigten Isomere, Octadecyl-Gruppen sowie die verzweigten Isomere und Eicosyl-Gruppen sowie die verzweigten Isomere. Die erfindungsgemäßen organischen Reste können zudem ringförmige und/oder aromatische Bauteile enthalten. Repräsentative Strukturen sind Cyclohexyl-, Phenyl- und Benzyl-Gruppen. Es ist ferner erfindungsgemäß, wenn als zumindest ein organischer Rest Oligomere oder Polymere eingesetzt werden, die zumindest eine hydrolysierbare Silyl-Gruppe enthalten. Kommen als einer oder mehrere der Reste E, F, G ein Rest der obigen Liste zur Anwendung, dann ist dieser zusätzlich durch ein chemisches Bauelement, das zumindest eine Gruppe X enthält, modifiziert.

Im Sinne dieser Erfindung bevorzugt einsetzbare Beispiele für Silane mit Struktur I sind Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan, iso-Butyltrimethoxysilan, iso-Butyltriethoxysilan, Octyltrimethoxysilan, Octyltriethoxysilan, iso-Octyltrimethoxysilan, iso-Octyltriethoxysilan, Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan.
Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Im Sinne dieser Erfindung besonders bevorzugt einsetzbare Vertreter der Silane mit Struktur II, die zumindest eine Funktionalisierung tragen, sind beispielsweise N-(2-Aminoethyl)-3-aminopropyltrimethoxysilan, N-(2-Aminoethyl)-3-aminopropyltriethoxysilan, 3-Aminopropyltrimethoxysilan, 3-Aminopropyltriethoxysilan, 3-Aminopropyldiethoxymethylsilan, N-(2-Aminoethyl)-3-aminopropyldimethoxymethylsilan, (N-Butyl)-3-aminopropyltrimethoxysilan, 3-(N-Ethylamino)-2-methylpropyltrimethoxysilan, 4-Amino-3,3-dimethylbutyltrimethoxysilan, 4-Amino-3,3-dimethylbutyldimethoxymethylsilan, (N-Cyclohexyl)aminomethyldimethoxymethylsilan, (N-Cyclohexyl)-aminomethyltrimethoxysilan, (N-Phenyl)-3-aminopropyltrimethoxysilan, (N-Phenyl)-aminomethyldimethoxymethylsilan, (N-Benzyl-2-aminoethyl)-3-aminopropyltrimethoxysilan, [2-(N-Benzyl-N-vinylamino)-ethyl]-3-aminopropyltrimethoxysilan Hydrogenchlorid, [2-(N-Benzyl-N-vinylamino)-ethyl]-3-aminopropyltrimethoxysilan, Bis-(3-propyltriethoxysilyl)-amin, 3-Triethoxysilylpropylbernsteinsäureanhydrid, 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Isocyanatopropyltrimethoxysilan, 3-Isocyanatopropyltriethoxysilan, Isocyanatomethyltrimethoxysilan, Isocyanatomethyldimethoxymethylsilan, Tris-[3-(trimethoxysilyl)-propyl]-isocyanurat, 3-Ureidopropyltrimethoxysilan, 3-Ureidopropyltriethoxysilan, 3-Mercaptopropyltrimethoxysilan, 3-Mercaptopropyldimethoxymethylsilan, Bis-(3-triethoxysilylpropyl)-disulfan, Bis-(3-triethoxysilylpropyl)-tetrasulfan, Bis-(triethoxysilylpropyl)-polysulfan, Octadecylaminodimethyltrimethoxysilylpropylammoniumchlorid.

Weitere Bestandteile von Primern umfassen Filmbildner wie Polymere, rheologische Additive, Stabilisatoren, Katalysatoren und/oder weitere Mittel zur Einstellung eines gewünschten pH-Werts. Primer liegen bevorzugt in Form von Lösungen oder Dispersionen in organischen Lösungsmitteln und/oder Wasser vor. Bevorzugt werden Mischungen aus Alkylalkoholen und Wasser.

### Verfahren zur Herstellung erfindungsgemäßer Verbunde

Das erfindungsgemäße Verfahren wurde bereits oben dargestellt.

Bei einer vorteilhaften Ausführung des erfindungsgemäßen Verfahrens werden zwei Substrate mit einem latentreaktiven Klebefilm verklebt, wobei
- zumindest ein Substrat auf der zu verklebenden Seite anorganischen (hydrophilen) Charakter aufweist,
- jede der mit dem latentreaktivem Klebefilm zu verklebende anorganische (hydrophile) Substratoberfläche mit einem Primer versehen wird, und zumindest auf einer Seite ein Silan enthaltender Primer eingesetzt wird,
- der Primer ggf. getrocknet wird,
- der latentreaktive Klebefilm mindestens eine latentreaktive Klebefilmschicht, die eine thermoplastische Komponente, die eine Schmelztemperatur (als getrockneter Film) T(Schmelz) mit 35°C ≤ T(Schmelz) ≤ 90°C aufweist und funktionelle Gruppen enthält, die mit Isocyanat reagieren können, und eine Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist, wobei die Partikel eine Anspringtemperatur T(Anspring) von 40°C ≤ T(Anspring) ≤ 120°C aufweisen, enthält,
- der latentreaktive Klebefilm entweder zunächst auf eines der beiden Substrate aufgebracht wird und anschließend mit dem anderen Substrat in Kontakt gebracht wird oder mit beiden Substraten gleichzeitig in Kontakt gebracht wird,
bevor die Verklebungsreaktion durch Erwärmen auf eine Temperatur mindestens in Höhe der Anspringtempertur bewirkt wird.

Ein weiterer Aspekt der Erfindung betrifft ein Verfahren zur Verklebung zweier Substrate mit einem latentreaktiven Klebefilm, wobei
- zumindest ein Substrat auf der zu verklebenden Seite anorganischen (hydrophilen) Charakter aufweist,
- der latentreaktive Klebefilm mindestens eine latentreaktive Klebefilmschicht, die eine thermoplastische Komponente, die eine Schmelztemperatur (als getrockneter Film) T(Schmelz) mit 35°C ≤ T(Schmelz) ≤ 90°C aufweist und funktionelle Gruppen enthält, die mit Isocyanat reagieren können, und eine Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist, wobei die Partikel eine Anspringtemperatur T(Anspring) von 40°C ≤ T(Anspring) ≤ 120°C aufweisen, enthält,
- zumindest diejenige Seite, die mit dem Substrat mit der Oberfläche mit dem anorganischen (hydrophilen) Charakter in Kontakt gebracht werden soll mit einem Silan enthaltenden Primer, oder beide Seiten des latentreaktiven Klebefilms mit einem Primer versehen wird,
- der Primer ggf. getrocknet wird
- und der mit Primer versehene latentreaktive Klebefilm entweder zunächst auf eines der beiden Substrate aufgebracht wird und anschließend mit dem anderen Substrat in Kontakt gebracht wird oder mit beiden Substraten gleichzeitig in Kontakt gebracht wird,
bevor die Verklebungsreaktion durch Erwärmen auf eine Temperatur mindestens in Höhe der Anspringtempertur bewirkt wird.

Der resultierende Verbund insbesondere zur Verwendung für optische, elektronische und/oder feinmechanische Geräte weist eine Verklebungsfestigkeit (nach Test A) vor Feucht-/Wärme-Lagerung (nach Test C) von mindestens 3 N/mm² auf. Die Verklebungsfestigkeit des resultierenden Verbunds nach Feucht-/Wärme-Lagerung (nach Test C) liegt im Vergleich zum nicht feuchtwarm gelagerten Referenzverbund (Verklebungsfestigkeit = 100 %) bei mindestens 50 %, bevorzugt bei mindestens 70 %, sehr bevorzugt bei mindestens 90 %. Darüber hinaus erfüllt der resultierende Verbund bevorzugt auch die Anforderungen an die Schockbeständigkeit (bestimmt über den Ball Drop, Test B) mit mindestens 175 cm.

Für eine als Beispiel angeführte Herstellung von Verbunden für Mobilgeräten sei hier auf eine Anwendung in Konsumgüterelektronikartikeln eingegangen. In diesem beispielhaften Herstellungsverfahren wird dazu zunächst jedes Substrat, das auf der zu verklebenden Oberfläche anorganischen (hydrophilen) Charakter aufweist, mit einem Primer versehen. Der Primerauftrag erfolgt manuell (z. B. durch Pinseln oder Sprühen) oder maschinell (z. B. durch Beschichten oder Bedrucken). Sofern der Primer Lösungsmittel und/oder Wasser enthält, wird anschließend getrocknet. Die Dicke des Primers nach dem Trocknen beträgt bevorzugt weniger als 10 µm, bevorzugt weniger als 5 µm, sehr bevorzugt weniger als 2 µm oder sogar weniger als 1 µm.

Wird eine Oberfläche des latentreaktiven Klebefilms mit Primer versehen, dann erfolgt der Primerauftrag manuell (z. B. durch Pinseln oder Sprühen) oder maschinell (z. B. durch Beschichten oder Bedrucken). Der Auftrag kann dabei teil- oder vollflächig erfolgen. Sofern der Primer Lösungsmittel und/oder Wasser enthält, wird anschließend getrocknet. Die Dicke des Primers nach dem Trocknen beträgt bevorzugt weniger als 10 µm, bevorzugt weniger als 5 µm, sehr bevorzugt weniger als 2 µm oder sogar weniger als 1 µm.

Die latentreaktiven Klebefilme werden üblicherweise aus Rollenware zu Stanzlingen verarbeitet und so für die Verbundherstellung bereitgestellt. Die Stanzlinge werden entweder durch ein Laserschneidverfahren, durch Flachbettstanzen oder durch Rotationsstanzen hergestellt. Der Stanzling hat üblicherweise die Dimension des ersten Bauteils, kann aber auch etwas kleiner sein, um leichte Ausquetschprozesse während des Verklebungsprozesses zu erlauben.

Im einfachsten Fall wird der Stanzling des latentreaktiven Klebefilms ohne temporären Träger manuell, z.B. mit Hilfe einer Pinzette, auf dem ersten Bauteil bzw. zwischen den zusammenzufügenden Bauteilen positioniert.

In einer weiteren Ausführung wird der Stanzling des latentreaktiven Klebefilms nach der Positionierung auf dem ersten Bauteil mit einer Wärmequelle behandelt, wodurch sich die Haftung des Stanzlings zum ersten Bauteil erhöht. Im einfachsten Fall kann als Wärmequelle ein IR-Strahler, ein Bügeleisen oder eine Heizplatte eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.

In einer weiteren vorteilhaften Ausgestaltung wird das erste Bauteil auf den Stanzling des latentreaktiven Klebefilms platziert. Die Platzierung erfolgt auf der offenen Seite. Auf der Rückseite befindet sich noch das temporäre Trägermaterial. Anschließend wird durch eine Wärmequelle Wärme durch das erste Bauteil in den latentreaktiven Klebefilm eingebracht. Dadurch wird der Klebefilm tackig, d.h. klebrig, und haftet stärker am ersten Bauteil als an dem temporären Träger. Es wird durch das erste Bauteil geheizt.

Für die Einbringung der Wärme wird in einer bevorzugten Auslegung eine Heizpresse eingesetzt. Der Stempel der Heizpresse ist dabei z.B. aus Aluminium, Messing oder Bronze gefertigt und wird in seiner Ausformung in der Regel den Konturen des Bauteils bzw. den Dimensionen des Stanzlings angepasst. Um eine genaue Positionierung des Stanzlings auf dem ersten Bauteil zu gewährleisten, werden in der Regel Formteile eingesetzt, die den Konturen der zu verklebenden Bauteile angepasst sind, wodurch Verrutschungen verhindert werden. Durch Führungsstifte im Formteil und entsprechende Führungslöcher im temporären Trägermaterial des latentreaktiven Klebefilms kann die exakte Positionierung zwischen Stanzling und erstem Bauteil sichergestellt werden. Andere Positionierungsmöglichkeiten sind denkbar. Nach der Wärmeaktivierung wird das erste Bauteil mit dem auflaminierten Klebefilm vom Formteil entfernt. Der gesamte Prozess kann auch in einen automatischen Prozess überführt werden.

Das Verfahren zur Herstellung eines erfindungsgemäßen Verbunds betrifft daher auch den Teilprozess umfassend die folgenden Schritte:
a) Fixieren des ersten Bauteils auf einem Formbauteil;
b) Platzieren des zu verklebenden zweiten Bauteils mit einem doppelseitigen latentreaktiven Klebefilm mit mindestens einer latentreaktiven Klebefilmschicht, die eine thermoplastische Komponente, die eine Schmelztemperatur T(Schmelz) mit 35°C ≤ T(Schmelz) ≤ 90°C aufweist und funktionelle Gruppen enthält, die mit Isocyanat reagieren können, und eine Isocyanat-haltige Komponente, die partikulär, insbesondere feinteilig partikulär, in die thermoplastische Komponente eindispergiert vorliegt und blockiert, mikroverkapselt oder im Bereich der Partikeloberfläche im Wesentlichen desaktiviert ist, wobei die Partikel eine Anspringtemperatur T(Anspring) von 40°C ≤ T(Anspring) ≤ 120°C aufweisen und wobei T(Anspring) ≥ T(Schmelz) ist, enthält, auf dem zweiten Bauteil;
c) Applizieren von Druck und Temperatur, insbesondere mittels eines Heizpressstempels;
d) Entfernen des verklebten Verbunds aus dem Formbauteil,
wobei zwischen Schritt c) und Schritt d) wahlweise noch eine Rückkühlung durchgeführt werden kann und wobei eine oder alle zu verklebenden Bauteil-Oberflächen, die auf der betreffenden Oberfläche anorganischen (hydrophilen) Charakter aufweisen, und/oder eine oder beide Oberflächen des latentreaktiven Klebefilms vor Schritt b) mit Primer versehen werden, insbesondere so dass zumindest an allen Kontaktfläche, bei der eine der sie bildenden Oberflächen anorganischen (hydrophilen) Charakter aufweist, Primer vorgesehen ist.

In Schritt c) werden Druck und Temperatur appliziert. Dies erfolgt durch einen Heizstempel, der aus einem Material mit guter thermischer Leitfähigkeit besteht. Vorteilhafte Materialien sind z.B. Kupfer, Messing, Bronze oder Aluminium. Es können aber auch andere Metalle oder Legierungen eingesetzt werden. Des Weiteren sollte der Heizpressstempel bevorzugt die Form der Oberseite des einen Bauteils einnehmen. Diese Form kann wiederum 2-dimensionaler oder 3-dimensionaler Natur sein. Der Druck wird vorteilhafter Weise über einen Pneumatikzylinder aufgebracht. Die Applizierung muss aber nicht unbedingt über Luftdruck erfolgen. Auch sind z.B. hydraulische Pressvorrichtungen oder elektromechanische Stellantriebe z.B. über Spindeln möglich. Des Weiteren kann es von Vorteil sein, mehrfach Druck und Temperatur einzubringen, um z.B. durch Reihenschaltung oder Rotationsprinzip den Prozessdurchsatz zu erhöhen. Die Heizpressstempel müssen in diesem Fall nicht alle mit der gleichen Temperatur und/ oder gleichem Druck betrieben werden. Weiterhin können auch die Kontaktzeiten der Stempel unterschiedlich gewählt werden. Bevorzugte Kontaktzeiten liegen bei höchstens 600 s, sehr bevorzugt bei weniger als 300 s, besonders bevorzugt bei weniger als 150 s. Verpressdrucke liegen bevorzugt bei weniger als 6 bar, sehr bevorzugt bei weniger als 4 bar. Temperaturen des Heizstempels liegen bevorzugt bei weniger als 150 °C, sehr bevorzugt bei weniger als 125 °C und besonders bevorzugt bei weniger als 100 °C.

Erfindungsgemäße Verbunde erfüllen Anforderungen (i) und (iii), vorzugsweise Anforderungen (i), (ii) und (iii) der folgenden Liste:
(i) Push-out-Festigkeit vor Feucht-/Wärme-Lagerung (Test A) ≥ 3 N/mm², bevorzugt ≥ 4 N/mm², sehr bevorzugt ≥ 5 N/mm²
(ii) Push-out-Festigkeit nach Feucht-/Wärme-Lagerung im Vergleich zur nicht feucht-wärme-behandelten Referenz (= 100 %) (Test C): ≥ 50 %, bevorzugt ≥ 70 %, sehr bevorzugt ≥ 90 %
(iii) Schockbeständigkeit, Ball Drop (Test B) ≥ 175 cm, bevorzugt ≥ 200 cm, sehr bevorzugt ≥ 225 cm.

### Prüfmethoden

### Test (A) Push-out:

Der Push-out-Test ermöglicht Aussagen über die Verklebungsfestigkeit eines doppelseitig klebenden Klebeprodukts in Richtung der Klebschichtnormalen. Dazu wird ein kreisförmiges Substrat S1 mit Durchmesser 21 mm mit dem zu untersuchenden Klebefilm, der rund zugeschnitten oder gestanzt wird und dann ebenfalls einen Durchmesser von 21 mm hat, auf einem Rahmen (Substrat S2) verklebt. Der Rahmen (Substrat S2) weist eine kreisförmige Bohrung mit Durchmesser 9 mm auf, die im Wesentlichen mit dem Substrat S1 konzentrisch ist. Das Format des Rahmens (Substrat S2) überragt das Format von Substrat S1, so dass der Verbund mittels der überstehenden Bereiche des Rahmens (Substrat S2) auf einem Auflegetisch platziert werden kann.

Mittels eines zylindrischen Stempels (Durchmesser 7 mm), der in eine Zugprüfmaschine eingespannt ist, wird durch konstante Vorwärtsbewegung des Stempels durch das Loch in Substrat S2 senkrecht auf Substrat S1 gedrückt und so eine Kraft auf die Klebefuge im Verbund ausgeübt. Die Prüfgeschwindigkeit des Stempels liegt bei 10 mm/s. Aufgenommen wird diejenige Kraft, bei der Substrat S1 vom Rahmen (Substrat S2) abgelöst wird. Die Kraft wird auf die Stempelfläche bezogen, so dass Push-out-Festigkeiten in Einheiten von N/mm² resultieren. Der Verbund besteht die Messung, wenn die Push-out-Festigkeit oberhalb 3 N/mm² liegt. Das Prüfklima ist 23 °C und 50 % relative Feuchtigkeit.

### Test (B) Ball-Drop:

Dieser Test lässt Aussagen über die Stoßbeständigkeit oder Schlagbeständigkeit ("Shock Resistance") der mit dem latentreaktiven Klebefilm verklebten Probemustern zu, die auf die Schockabsorptionsfähigkeit des Klebefilms zurückzuführen sind.

Aus dem zu untersuchenden latentreaktiven Klebefilm wird eine quadratische, rahmenförmige Probe ausgeschnitten (Außenmaße 33 mm x 33 mm; Stegbreite 3,0 mm; Innenmaße (Fensterausschnitt) 27 mm x 27 mm). Diese Probe wird auf einen Rahmen aus anodisiertem Aluminium (Außenmaße 50 mm x 50 mm; Stegbreite 12,5 mm; Innenmaße (Fensterausschnitt) 25 mm x 25 mm; Dicke 3 mm; Substrat A im Sinne der Erfindung) geklebt. Auf der anderen Seite des latentreaktiven Klebefilms wird ein PC-Fenster von 35 mm x 35 mm (Substrat B im Sinne der Erfindung) geklebt. Die Verklebung von Rahmen aus anodisiertem Aluminium, latentreaktivem Klebefilmrahmen und PC-Fenster erfolgt derart, dass die geometrischen Zentren und die Diagonalen jeweils übereinanderliegen (Eck-auf-Eck). Die Verklebungsfläche beträgt 360 mm². Die Verklebung wird für 60 s mit 3 bar bei 100 °C gepresst und für 24 Stunden konditioniert bei 23 °C / 50 % relativer Feuchte gelagert.

Unmittelbar nach der Lagerung wird der Klebeverbund aus dem Rahmen aus anodisiertem Aluminium, latentreaktivem Klebefilm und PC-Scheibe mit den überstehenden Kanten des Rahmens aus anodisiertem Aluminium derart auf ein Rahmengestell (Probenhalter) gelegt, so dass der Verbund waagerecht ausgerichtet ist und die PC-Scheibe frei hängend nach unten zeigt. Auf die so angeordnete Probe wird senkrecht aus einer Höhe von bis zu 250 cm (durch das Fenster des Rahmens aus anodisiertem Aluminium hindurch) eine Stahlkugel (Durchmesser 15 mm, Masse 5,6 g) zentriert auf die PC-Scheibe fallen gelassen (Messbedingungen 23 °C, 50 % relative Feuchte). Mit jeder Probe werden drei Untersuchungen durchgeführt, sofern die PC-Scheibe sich nicht vorher gelöst hat. Es wird diejenige Fallhöhe registriert, bei der der Klebeverbund sich noch nicht gelöst hat. Je höher die Fallhöhe, desto höher die Schockbeständigkeit.

### Test (C) Push-out nach Feucht-/Wärme-Lagerung:

Der Push-out-Test (C) erfolgt nach den Vorgaben aus Test A. Der zu vermessende Verbund wird jedoch vor der Messung für 72 h in einem Klimaschrank in einer ersten Variante der Prüfmethode bei 60 °C und 90 % relativer Feuchtigkeit, in einer zweiten Variante der Prüfmethode bei 85 °C und 85 % relativer Feuchtigkeit gelagert. Die Verbunde werden nach der Lagerung und vor der Messung noch 1 Tag bei 23 °C und 50 % relativer Feuchtigkeit rekonditioniert. Der Push-out Wert für feuchtwarm gelagerte Verbunde wird in Bezug gesetzt zum Push-out Wert für einen gleichartigen Verbund, der nach seiner Herstellung nicht feuchtwarmem Einfluss ausgesetzt ist, sondern ausschließlich bei 23 °C und 50 % relativer Feuchtigkeit gelagert wird und nach Test A vermessen wird.

Die Widerstandfähigkeit der Verklebungsfestigkeit gegenüber feuchtwarmem Klima wird dann in Prozent vom Referenzwert angegeben. Erfindungsgemäße Verbunde weisen eine Widerstandfähigkeit von mindestens 50 %, bevorzugt mindestens 70 %, sehr bevorzugt mindestens 90 % auf.

### Experimente

Herstellung eines latentreaktiven Klebefilms: Ein latentreaktiver Klebefilm wurde hergestellt aus 100 Teilen Dispercoll U XP 2702, 13 Teilen Dispercoll BL XP 2514 und 1,5 Teilen Borchigel 0625 (siehe jeweils oben). Die Formulierungsbestandteile wurden als wässrige Dispersion in einem Becherglas mit einem Ankerrührer bei 60 1/min über einen Zeitraum von 15 min bei Raumtemperatur vermischt. Der Feststoffgehalt wurde durch Zugabe von demineralisiertem Wasser auf 46 Gew.-% eingestellt.

Mittels eines Laborstreichtischs wurde mit einem Rakel eine Beschichtung auf beidseitig Polyethylen-beschichtetem und silikonisiertem Papier hergestellt. Resultierende Lappenmuster wurden zunächst bei Raumtemperatur für 30 min abgelüftet und anschließend im Umlufttrockenschrank bei 45 °C für 20 min getrocknet. Die Muster wiesen eine Schichtdicke von 100 µm auf. Abschnitte dieser Muster wurden als latentreaktive Klebfilme für die Herstellung von Verbunden für die weiteren Messungen verwendet. Bis zur Messung wurden die Muster bei 23 °C und 50 % relativer Feuchtigkeit gelagert.

Es wurden zwei Verbunde untersucht. In Verbund 1 war Substrat S1 Polycarbonat (Macrolon 099; entsprechend Substrat B im Sinne der Erfindung) und Substrat S2 anodisiertes Aluminium (E6EV1; entsprechend Substrat A im Sinne der Erfindung).

In Verbund 2 war Substrat S1 Glas (Floatglas; entsprechend Substrat A im Sinne der Erfindung) und Substrat S2 Polyamid (Polyamid 6, 20 % Glasfasern; entsprechend Substrat B im Sinne der Erfindung).

Aufbringen des Primers: Die Primerlösung wurde mit einem Pinsel gleichmäßig auf die jeweilige Oberfläche des Substrats A (anodisiertes Aluminium in Verbund 1; Glas in Verbund 2) aufgebracht. Danach wurden die behandelten Substrate für 10 min im Umlufttrockenschrank bei 25 °C gelagert um die Oberfläche abtrocknen und den Primer einwirken zu lassen.

Es kamen zwei Primervarianten zum Einsatz. Primer P1 bestand aus 0,5 g (3-Glycidyloxypropyl)-trimethoxysilan (Sigma Aldrich), ein Silan nach Struktur II, in einem Gemisch aus 49,5 g isoPropanol und 50 g Wasser. Primer P2 bestand aus 1 g (3-Aminopropyl)-triethoxysilan (Sigma Aldrich), ein Silan nach Struktur II, und 1 g Octyltriethoxysilan (Sigma Aldrich), ein Silan nach Struktur I, in einem Gemisch aus 48 g Ethanol und 50 g Ethylacetat.

Mustervorbereitung für Test A und Test C: Aus dem einschichtigen Klebefilm wurden mittels eines Stanzeisens kreisrunde Klebebandstanzlinge mit einem Durchmesser von 21 mm erzeugt. Jeweils einer dieser Stanzlinge wurde zwischen ein Substrat S1 (Verbund 1: Polycarbonat; Verbund 2: Glas) und ein Substrat S2 (Verbund 1: anodisiertes Aluminium; Verbund 2: Polyamid) platziert und in einer Laborheizpresse bei 100 °C Stempeltemperatur und 3 bar für 60 s verpresst und so ein entsprechender Verbund erzeugt.

Mustervorbereitung für Test B: Aus dem einschichtigen Klebefilm wurden mittels eines Stanzeisens quadratische, rahmenförmige Proben ausgestanzt (Geometrie siehe Test B). Jeweils ein Stanzling wurde zwischen ein Substrat S1 (Verbund 1: Polycarbonat) und ein Substrat S2 (Verbund 1: anodisiertes Aluminium) platziert und in einer Laborheizpresse bei 100 °C Stempeltemperatur und 3 bar für 60 s verpresst und so ein entsprechender Verbund erzeugt.

### Ergebnisse

| | Verbund 1 | | | Verbund 2 | | |
|---|---|---|---|---|---|---|
| | S1 | Primer | S2 | S1 | Primer | S2 |
| Beispiel 1 | Polycarbonat | P1 | eloxiertes Aluminium | | | |
| Beispiel 2 | | | | Glas | P1 | Polyamid |
| Beispiel 3 | Polycarbonat | P2 | eloxiertes Aluminium | | | |
| Beispiel 4 | | | | Glas | P2 | Polyamid |
| Beispiel 5 (Vergleich) | Polycarbonat | Kein | eloxiertes Aluminium | | | |
| Beispiel 6 (Vergleich) | | | | Glas | Kein | Polyamid |

| | Push-out (Test A) | Push-out (Test C) | Widerstandfähigkeit nach Lagerung 60 °C / 90 % rel. Feuchte | Ball Drop (Test B) |
|---|---|---|---|---|
| Beispiel 1 | 5,3 N/mm² | 5,4 N/mm² | 102 % | > 250 cm |
| Beispiel 2 | 3,4 N/mm² | 3,9 N/mm² | 115 % | Nicht ermittelt |
| | (Glasbruch) | | | |
| Beispiel 3 | 5,3 N/mm² | 4,2 N/mm² | 79 % | > 250 cm |
| Beispiel 4 | 3,4 N/mm² (Glasbruch) | 3,2 N/mm² (Glasbruch) | 94 % | Nicht ermittelt |
| Beispiel 5 (Vergleich) | 5,3 N/mm² | 2,5 N/mm² | 47 % | > 250 cm |
| Beispiel 6 (Vergleich) | 3,4 N/mm² (Glasbruch) | 0,4 N/mm² | 12 % | Nicht ermittelt |

| | Push-out (Test A) | Push-out (Test C) | Widerstandfähigkeit nach Lagerung 85 °C / 85 % rel. Feuchte | Ball Drop (Test B) |
|---|---|---|---|---|
| Beispiel 1 | 5,3 N/mm² | 5,8 N/mm² | 109 % | > 250 cm |
| Beispiel 2 | 3,4 N/mm² (Glasbruch) | 2,7 N/mm² (Glasbruch) | 79 % | Nicht ermittelt |
| Beispiel 3 | 5,3 N/mm² | 4,8 N/mm² | 91 % | > 250 cm |
| Beispiel 4 | 3,4 N/mm² (Glasbruch) | 2,8 N/mm² (Glasbruch) | 82 % | Nicht ermittelt |
| Beispiel 5 (Vergleich) | 5,3 N/mm² | 2,3 N/mm² | 43 % | > 250 cm |
| Beispiel 6 (Vergleich) | 3,4 N/mm² (Glasbruch) | 1,5 N/mm² | 44 % | Nicht ermittelt |

Die Ergebnisse zeigen, dass die Verklebungsfestigkeit für alle Testverbunde auf hohem Niveau liegt (> 3 N/mm² oder sogar > 5 N/mm²). Bei Glas als einem der zu verklebenden Substrate ist die Verklebungsfestigkeit durch die Bruchfestigkeit des Glassubstrats limitiert. Feuchtwarme Lagerung führt zu einer Abnahme der Verklebungsfestigkeit sofern kein Primer eingesetzt wird. Verwendung eines Primers dagegen führt zu einer Verringerung der Abnahme der Verklebungsfestigkeit. Werte von über 100 % sind vermutlich auf die Wärmeeinwirkung während der feuchtwarmen Lagerung zurückzuführen, die sich positiv auf die Verklebung auswirkt. Für Testverbunde mit Polycarbonat wurde zudem die Schockbeständigkeit untersucht. Sie war in allen Fällen hervorragend. Da Glas zu Splitterbruch neigt, wurde hier auf Test B verzichtet.

## Patentansprüche

1. Verfahren zur Verklebung zweier Substrate, nämlich eines ersten Substrats A und eines zweiten Substrats B, miteinander; mittels eines latentreaktiven Klebefilms mit mindestens einer latentreaktiven Klebefilmschicht, die eine thermoplastische Komponente, die eine Schmelztemperatur T(Schmelz) mit 35°C ≤ T(Schmelz) ≤ 90°C aufweist und funktionelle Gruppen enthält, die mit Isocyanat reagieren können, und eine Isocyanat-haltige Komponente, die partikulär in die thermoplastische Komponente eindispergiert vorliegt und blockiert, mikroverkapselt oder im Bereich der Partikeloberfläche im Wesentlichen desaktiviert ist, wobei die Partikel eine Anspringtemperatur T(Anspring) von 40°C ≤ T(Anspring) ≤ 120°C aufweisen und wobei T(Anspring) ≥ T(Schmelz) ist,
wobei eine Oberfläche des ersten Substrats A mit einer ersten Oberfläche des latentreaktiven Klebefilms in Kontakt gebracht und wird,
und wobei eine Oberfläche des zweiten Substrats B mit der zweiten Oberfläche des latentreaktiven Klebefilms in Kontakt gebracht wird,
wobei die Verklebung bewirkt wird, indem der latentreaktive Klebefilm auf eine Temperatur erwärmt wird, die zumindest der Anspringtemperatur T(Anspring) entspricht oder höher ist,
**dadurch gekennzeichnet, dass**
zumindest die Oberfläche des ersten Substrats A, die mit dem latentreaktiven Klebefilm in Kontakt gebracht wird, vor der Inkontaktbringung des ersten Substrats A mit dem latentreaktiven Klebefilm mit einem Primer behandelt wird,
und/oder zumindest die erste Oberfläche des latentreaktiven Klebefilms, die mit dem ersten Substrat A in Kontakt gebracht wird, vor der Inkontaktbringung des ersten Substrats A mit dem latentreaktiven Klebefilm mit einem Primer behandelt wird,
wobei als Primer für die Verklebung des ersten Substrats A mit dem latentreaktiven Klebefilm ein Silan enthaltender Primer eingesetzt wird,
und wobei zumindest die Oberfläche des ersten Substrats A, die mit einer ersten Oberfläche des latentreaktiven Klebefilms in Kontakt gebracht wird, vollflächig oder teilflächig durch ein anorganisches Material gebildet ist.

2. Verfahren nach Anspruch 1, **dadurch gekennzeichnet, dass**
auch die Oberfläche des zweiten Substrats B, die mit einer zweiten Oberfläche des latentreaktiven Klebefilms in Kontakt gebracht wird, vollflächig oder teilflächig durch ein anorganisches Material gebildet ist.

3. Verfahren nach einem der vorangehenden Ansprüche, **dadurch gekennzeichnet, dass**
die Oberfläche des zweiten Substrats B, die mit dem latentreaktiven Klebefilm in Kontakt gebracht wird, vor der Inkontaktbringung des zweiten Substrats B mit dem latentreaktiven Klebefilm mit einem Primer behandelt wird.

4. Verfahren nach einem der vorangehenden Ansprüche, **dadurch gekennzeichnet, dass**
die zweite Oberfläche des latentreaktiven Klebefilms, die mit dem zweiten Substrat B in Kontakt gebracht wird, vor der Inkontaktbringung des zweiten Substrats B mit dem latentreaktiven Klebefilm mit einem Primer behandelt wird.

5. Verfahren nach einem der vorangehenden Ansprüche, **dadurch gekennzeichnet, dass**
der latentreaktive Klebefilm aus einer oder aus mehreren der latentreaktiven Klebefilmschichten besteht.

6. Verfahren nach einem der vorangehenden Ansprüche, **dadurch gekennzeichnet**, das
die Schmelztemperatur der thermoplastischen Komponente im Bereich 40 °C ≤ T(Schmelz) ≤ 60 °C liegt.

7. Verfahren nach einem der vorangehenden Ansprüche, **dadurch gekennzeichnet, dass** die Anspringtemperatur der Partikel im Bereich von 50°C ≤ T(Anspring) ≤ 120°C , bevorzugt im Bereich von 60°C ≤ T(Anspring) ≤ 90°C liegt.

8. Verfahren nach einem der vorangehenden Ansprüche, **dadurch gekennzeichnet, dass**
die Oberfläche des ersten Substrats A durch ein Glas, ein Metall oder eine Keramik gebildet ist.

9. Verfahren nach einem der vorangehenden Ansprüche, dass
die Oberfläche des ersten Substrats A Aluminium oder eloxiertes Aluminium ist.

10. Verfahren nach einem der Ansprüche 9 oder 10, **dadurch gekennzeichnet, dass**
die Oberfläche des zweiten Substrats B durch Glas, ein Metall oder eine Keramik gebildet ist.

11. Verfahren nach einem der Ansprüche 9 oder 10, **dadurch gekennzeichnet, dass**
das zweite Substrat B Kunststoff ist, insbesondere Polymethylmethacrylat, Polycarbonat, Acrylnitril-Butadien-Styrol-Copolymer (ABS), Polyamid oder Polycarbonat.

12. Verbund aus zwei miteinander verklebten Substraten erhältlich durch ein Verfahren nach einem der vorangehenden Ansprüche.

13. Verbund aus zwei mittels eines Klebefilm miteinander verklebten Substraten nach Anspruch 12, wobei der Klebefilm das Reaktionsprodukt einer Dispersion aus einer thermoplastischen Komponente enthaltend funktionelle Gruppen, die mit Isocyanat reagieren können, und aus einer partikulär in die thermoplastische Komponente eindispergierten Isocyanat-haltigen Komponente, **dadurch gekennzeichnet, dass**
die mittels einer Zugprüfmaschine im Push-Out-Test ermittelte Verklebungsfestigkeit nach einer Lagerung des Verbundes für 72 Stunden in einer Umgebung bei 60 °C und 90 % relativer Feuchtigkeit (Feucht-Wärme-Lagerung) und anschließender Lagerung für 1 Tag bei 23 °C und 50 % relativer Feuchtigkeit mindestens 50 % der Verklebungsfestigkeit beträgt, die für einen identischen Verbund ermittelt wird, der nach seiner Herstellung ausschließlich bei 23 °C und 50 % relativer Feuchtigkeit gelagert wird.

14. Verbund aus zwei mittels eines Klebefilm miteinander verklebten Substratennach Anspruch 12, wobei der Klebefilm das Reaktionsprodukt einer Dispersion aus einer thermoplastischen Komponente enthaltend funktionelle Gruppen, die mit Isocyanat reagieren können, und aus einer partikulär in die thermoplastische Komponente eindispergierten Isocyanat-haltigen Komponente, **dadurch gekennzeichnet, dass**
die mittels einer Zugprüfmaschine im Push-Out-Test ermittelte Verklebungsfestigkeit nach einer Lagerung des Verbundes für 72 Stunden in einer Umgebung bei 85 °C und 85 % relativer Feuchtigkeit (Feucht-Wärme-Lagerung) und anschließender Lagerung für 1 Tag bei 23 °C und 50 % relativer Feuchtigkeit mindestens 50 % der Verklebungsfestigkeit beträgt, die für einen identischen Verbund ermittelt wird, der nach seiner Herstellung ausschließlich bei 23 °C und 50 % relativer Feuchtigkeit gelagert wird.

15. Verbund aus zwei mittels eines Klebefilm miteinander verklebten Substraten nach einem der Ansprüche 12 bis 14, wobei der Klebefilm das Reaktionsprodukt einer Dispersion aus einer thermoplastischen Komponente enthaltend funktionelle Gruppen, die mit Isocyanat reagieren können, und aus einer partikulär in die thermoplastische Komponente eindispergierten Isocyanat-haltigen Komponente, **dadurch gekennzeichnet, dass**
der Verbund Bestandteil eines optischen, elektronischen und/oder feinmechanischen Geräts ist, insbesondere eines transportablen optischen, elektronischen oder feinmechanischen Geräts.

16. Verbund nach einem der Ansprüche 12 bis 15, **dadurch gekennzeichnet, dass** zumindest eines der Substrate durchsichtig oder durchscheinend ist.

17. Verbund nach Anspruch 16, **dadurch gekennzeichnet, dass**
das durchsichtige bzw. durchscheinende Substrat ein Fenster oder eine Linse zum Zwecke des Schutzes darunter angeordneter Komponenten und/oder zur Bewirkung physiko-optischer Effekte für die Funktion des optischen, elektronischen oder feinmechanischen Geräts ist.

18. Verbund nach einem der Ansprüche 15 bis 17, **dadurch gekennzeichnet, dass** das - insbesondere transportable - optische, elektronische oder feinmechanische Gerät gewählt ist aus der Gruppe umfassend:
• Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras, Digicams, Fernsichtgeräte, Nachtsichtgeräte
• Computer, Laptops, Notebooks, Netbooks, Ultrabooks, Tablet-Computer, Geräte mit berührungsempfindlichen Bildschirmen ("Touchscreen-Geräte"), Handhelds, elektronische Terminkalender und Organisatoren (sogenannte "Electronic Organizer" oder "Personal Digital Assistants", PDA), Schreibmaschinen, Modems, Computer-Zubehörgeräte, wie Mäuse, Zeichenpads, Mikrophone, Lautsprecher
• Lesegeräte für elektronische Bücher ("e-Books"),
• Fernseher (auch Mini-Fernsehgeräte), Filmabspielgeräte, Videoabspielgeräte, Monitore, Bildschirme, Displays, Beamer
• Radios, Walkmen, Musikabspielgeräte (z.B. CD, DVD, Blueray, Kassetten, USB, MP3-Player), Kopfhörer
• Drucker, Faxgeräte, Kopiergeräte,
• Telefone, Mobiltelefone, Smartphones, Funksprechgeräte, Freisprechgeräte
• Defibrilatoren, Blutzuckermessgeräte, Blutdruckmessgeräte
• Akkumulatorladegeräte, Messgeräte, Multimeter, Lampen, wie Taschenlampen, Laserpointer etc
• Detektoren, optische Vergrößerungsgeräte, Taschenrechner
• Fernsteuerungen, Fernbedienungen, Spielkonsolen
• GPS-Geräte, Navigationsgeräte
• Personenrufgeräte (Pager, Pieper)
• Datenspeichergeräte (USB-Sticks, externe Festplatten, Speicherkarten)
• Armbanduhren, Taschenuhren, Kettenuhren.

19. Verwendung eines Primers enthaltend Silan zur Verbesserung der Feucht-/WärmeBeständigkeit einer Verklebung zweier Substrate mittels eines latentreaktiven Klebefilms, der eine thermoplastische Komponente mit funktionellen Gruppen, die mit Isocyanat reagieren können, und eine Isocyanat-haltige Komponente, die partikulär in die thermoplastische Komponente eindispergiert vorliegt und im Bereich der Partikeloberfläche im Wesentlichen desaktiviert ist, enthält.

20. Verwendung nach Anspruch 19 in einem Verfahren nach einem der Ansprüche 1 bis 13.

21. Verwendung nach einem der Ansprüche 19 oder 20 bei der Herstellung eines Verbundes nach einem der Ansprüche 12 bis18.

## Claims

1. Method for adhering two substrates, namely a first substrate A and a second substrate B, to one another, by means of a latent-reactive adhesive film having at least one latent-reactive adhesive film layer which a thermoplastic component, which has a melting temperature T(melt) where 35°C ≤ T (melt) ≤ 90°C and contains functional groups which are able to react with isocyanate, and an isocyanate-containing component, which is present in a particulate form incorporated by dispersion into the thermoplastic component and which is blocked, microencapsulated, or substantially deactivated in the region of the particle surface, where the particles have an onset temperature T(onset) of 40°C ≤ T(onset) ≤ 120°C and where T(onset) ≥ T(melt),
where a surface of the first substrate A is contacted with a first surface of the latent-reactive adhesive film,
and where a surface of the second substrate B is contacted with the second surface of the latent-reactive adhesive film,
where the adhering is effected by heating of the latent-reactive adhesive film to a temperature which at least corresponds to the onset temperature T(onset) or is higher,
**characterized in that**
at least the surface of the first substrate A that is contacted with the latent-reactive adhesive film is treated with a primer before the first substrate A is contacted with the latent-reactive adhesive film, and/or at least the first surface of the latent-reactive adhesive film which is contacted with the first substrate A is treated with a primer before the first substrate A is contacted with the latent-reactive adhesive film,
where primer used for adhering the first substrate A to the latent-reactive adhesive film comprises a silane containing primer,
and where at least the surface of the first substrate A that is contacted with a first surface of the latent-reactive adhesive film is formed wholly or partly by an inorganic material.

2. Method according to Claim 1, **characterized in that** the surface of the second substrate B that is contacted with a second surface of the latent-reactive adhesive film is also formed wholly or partly by an inorganic material.

3. Method according to either of the preceding claims, **characterized in that**
the surface of the second substrate B that is contacted with the latent-reactive adhesive film is treated with a primer before the second substrate B is contacted with the latent-reactive adhesive film.

4. Method according to any of the preceding claims, **characterized in that**
the second surface of the latent-reactive adhesive film that is contacted with the second substrate B is treated with a primer before the second substrate B is contacted with the latent-reactive adhesive film.

5. Method according to any of the preceding claims, **characterized in that**
the latent-reactive adhesive film consists of one or of two or more of the latent-reactive adhesive film layers.

6. Method according to any of the preceding claims, **characterized in that**
the melting temperature of the thermoplastic component is in the range 40°C ≤ T(melt) ≤ 60°C.

7. Method according to any of the preceding claims, **characterized in that**
the onset temperature of the particles is in the range of 50°C ≤ T(onset) ≤ 120°C, preferably in the range of 60°C ≤ T(onset) ≤ 90°C.

8. Method according to any of the preceding claims, **characterized in that**
the surface of the first substrate A is formed by a glass, a metal, or a ceramic.

9. Method according to any of the preceding claims, that
the surface of the first substrate A is aluminium or anodized aluminium.

10. Method according to either of Claims 9 and 10, **characterized in that**
the surface of the second substrate B is formed by glass, a metal, or a ceramic.

11. Method according to either of Claims 9 and 10, **characterized in that**
the second substrate B is plastic, more particularly polymethyl methacrylate, polycarbonate, acrylonitrile-butadiene-styrene copolymer (ABS), polyamide, or polycarbonate.

12. Assembly of two substrates bonded adhesively to one another, obtainable by a method according to any of the preceding claims.

13. Assembly of two substrates bonded adhesively to one another by means of an adhesive film, according to Claim 12, where the adhesive film the reaction product of a dispersion composed of a thermoplastic component containing functional groups which are able to react with isocyanate, and of an isocyanate-containing component incorporated in particulate form by dispersion into the thermoplastic component, **characterized in that** the bond strength as determined by means of a tensile testing machine in the push-out test after storage of the assembly for 72 hours in an environment at 60°C and 90% relative humidity (hot-humid storage) and subsequent storage for 1 day at 23°C and 50% relative humidity is at least 50% of the bond strength determined for an identical assembly stored, following its production, exclusively at 23°C and 50% relative humidity.

14. Assembly of two substrates bonded adhesively to one another by means of an adhesive film according to Claim 12, where the adhesive film the reaction product of a dispersion composed of a thermoplastic component containing functional groups which are able to react with isocyanate, and of an isocyanate-containing component incorporated in particulate form by dispersion into the thermoplastic component, **characterized in that** the bond strength as determined by means of a tensile testing machine in the push-out test after storage of the assembly for 72 hours in an environment at 85°C and 85% relative humidity (hot-humid storage) and subsequent storage for 1 day at 23°C and 50% relative humidity is at least 50% of the bond strength determined for an identical assembly stored, following its production, exclusively at 23°C and 50% relative humidity.

15. Assembly of two substrates bonded adhesively to one another by means of an adhesive film according to any of Claims 12 to 14, where the adhesive film the reaction product of a dispersion composed of a thermoplastic component containing functional groups which are able to react with isocyanate, and of an isocyanate-containing component incorporated in particulate form by dispersion into the thermoplastic component, **characterized in that** the assembly is part of an optical, electronic and/or precision-mechanical device, more particularly of a transportable optical, electronic, or precision-mechanical device.

16. Assembly according to any of Claims 12 to 15, **characterized in that**
at least one of the substrates is transparent or translucent.

17. Assembly according to Claim 16, **characterized in that**
the transparent or translucent substrate is a window or a lens for protecting components situated beneath it and/or for producing physico-optical effects for the function of the optical, electronic, or precision-mechanical device.

18. Assembly according to any of Claims 15 to 17, **characterized in that**
the - especially transportable - optical, electronic, or precision-mechanical device is selected from the group encompassing:
• cameras, digital cameras, photographic accessories (such as exposure meters, flashguns, diaphragms, camera casings, lenses, etc.), film cameras, video cameras, digicams, binoculars, night vision devices
• computers, laptops, notebooks, netbooks, ultrabooks, tablet computers, devices with touch-sensitive screens (touchscreen devices), handhelds, electronic diaries and organizers (so-called "electronic organizers" or "personal digital assistants", PDAs), typewriters, modems, computer accessories, such as mice, graphics pads, microphones, loudspeakers
• reading devices for electronic books ("e-books"),
• televisions (including mini-TVs), film players, video players, monitors, screens, displays, projectors
• radios, Walkmans, music players (e.g. CD, DVD, Blu-ray, cassettes, USB, MP3 players), headphones
• printers, fax machines, copiers,
• telephones, mobile telephones, smartphones, two-way radios, hands-free telephones
• defibrillators, blood sugar meters, blood pressure monitors
• battery chargers, measuring devices, multimeters, lamps, such as torches, laser pointers, etc.
• detectors, optical magnifiers, pocket calculators
• remote controls, remote operating devices, games consoles
• GPS devices, navigation devices
• devices for summoning people (pagers, bleepers)
• data storage devices (USB sticks, external hard drives, memory cards)
• wrist watches, pocket watches, chain watches.

19. Use of a primer containing silane for improving the heat/humidity resistance of an adhered bond of two substrates by means of a latent-reactive adhesive film which comprises a thermoplastic component, having functional groups which are able to react with isocyanate, and an isocyanate-containing component, which is present in a particulate form incorporated by dispersion into the thermoplastic component and which is substantially deactivated in the region of the particle surface.

20. Use according to Claim 19 in a method according to any of Claims 1 to 13.

21. Use according to either of Claims 19 and 20 in the production of an assembly according to any of Claims 12 to 18.

## Revendications

1. Procédé de collage de deux substrats l'un à l'autre, à savoir un premier substrat A et un deuxième substrat B, au moyen d'un film adhésif à réactivité latente qui comporte au moins une couche de film adhésif à réactivité latente qui un composant thermoplastique qui a une température de fusion T (fusion) telle que 35 °C ≤ T (fusion) ≤ 90 °C et qui contient des groupes fonctionnels qui peuvent réagir avec un isocyanate et un composant contenant un isocyanate formé de particules dispersées dans le composant thermoplastique et qui est bloqué, micro-encapsulé ou sensiblement désactivé dans la zone de la surface de particule, les particules ayant une température d'amorçage T (amorçage) telle que 40 °C ≤ T (amorçage) ≤ 120 °C et telle que T (amorçage) ≥ T (fusion),
une surface du premier substrat A étant mise en contact avec une première surface du film adhésif à réactivité latente,
et une surface du deuxième substrat B étant mise en contact avec la deuxième surface du film adhésif à réactivité latente,
le collage étant effectué en ce que le film adhésif à réactivité latente est chauffé à une température qui correspond au moins à la température d'amorçage T (amorçage) ou qui est supérieure à celle-ci, **caractérisé en ce que**
au moins la surface du premier substrat A, qui est mise en contact avec le film adhésif à réactivité latente, est traitée avec un primaire avant que le premier substrat A ne soit mis en contact avec le film adhésif à réactivité latente,
et/ou au moins la première surface du film adhésif à réactivité latente, qui est mise en contact avec le premier substrat A, est traitée avec un primaire avant que le premier substrat A ne soit mis en contact avec le film adhésif à réactivité latente,
un primaire contenant du silane étant utilisé comme primaire pour coller le premier substrat A au film adhésif à réactivité latente,
et au moins la surface du premier substrat A, qui est mise en contact avec une première surface du film adhésif à réactivité latente, étant formée sur toute la surface ou sur une partie de la surface par une matière minérale.

2. Procédé selon la revendication 1, **caractérisé en ce que** la surface du deuxième substrat B, qui est mise en contact avec une deuxième surface du film adhésif à réactivité latente, est formée sur toute la surface ou sur une partie de la surface par une matière minérale.

3. Procédé selon l'une des revendications précédentes, **caractérisé en ce que**
la surface du deuxième substrat B, qui est mise en contact avec le film adhésif à réactivité latente, est traitée avec un primaire avant que le deuxième substrat B ne soit mis en contact avec le film adhésif à réactivité latente.

4. Procédé selon l'une des revendications précédentes, **caractérisé en ce que**
la deuxième surface du film adhésif à réactivité latente, qui est mise en contact avec le deuxième substrat B, est traitée avec un primaire avant que le deuxième substrat B ne soit mis en contact avec le film adhésif à réactivité latente.

5. Procédé selon l'une des revendications précédentes, **caractérisé en ce que**
le film adhésif à réactivité latente comprend une ou plusieurs des couches de film adhésif à réactivité latente.

6. Procédé selon l'une des revendications précédentes, **caractérisé en ce que**
la température de fusion du composant thermoplastique est dans la gamme 40 °C ≤ T (fusion) ≤ 60 °C.

7. Procédé selon l'une des revendications précédentes, **caractérisé en ce que** la température d'amorçage des particules est dans la gamme 50 °C ≤ T (amorçage) ≤ 120 °C, de préférence 60 °C ≤ T (amorçage) ≤ 90 °C.

8. Procédé selon l'une des revendications précédentes, **caractérisé en ce que**
la surface du premier substrat A est formée par un verre, un métal ou une céramique.

9. Procédé selon l'une des revendications précédentes, que
la surface du premier substrat A est en aluminium ou en aluminium anodisé.

10. Procédé selon l'une des revendications 9 et 10, **caractérisé en ce que**
la surface du deuxième substrat B est formée par du verre, un métal ou une céramique.

11. Procédé selon l'une des revendications 9 et 10, **caractérisé en ce que**
le deuxième substrat B est une matière synthétique, en particulier du polyméthacrylate de méthyle, du polycarbonate, le copolymère acrylonite-butadiène-styrène (ABS), du polyamide ou du polycarbonate.

12. Composite formé de deux substrats collés l'un à l'autre, ledit composite pouvant être obtenu par un procédé selon l'une des revendications précédentes.

13. Composite formé de deux substrats collés l'un à l'autre au moyen d'un film adhésif selon la revendication 12, le film adhésif le produit de réaction d'une dispersion formée d'un composant thermoplastique contenant des groupes fonctionnels qui peuvent réagir avec un isocyanate et d'un composant contenant un isocyanate formé de particules dispersées dans le composant thermoplastique, **caractérisé en ce que**
la solidité du collage, déterminée au moyen d'une machine d'essai de traction dans l'essai de poussée après stockage du composite pendant 72 heures dans un environnement à 60 °C et 90 % d'humidité relative (stockage humide et chaud) puis après stockage pendant 1 journée à 23 °C et 50 % d'humidité relative, représente au moins 50 % de la solidité du collage qui est déterminée pour un composite identique qui, après sa production, est stocké exclusivement à 23 °C et 50 % d'humidité relative.

14. Composite formé de deux substrats collés l'un à l'autre au moyen d'un film adhésif selon la revendication 12, le film adhésif le produit de réaction d'une dispersion d'un composant thermoplastique contenant des groupes fonctionnels qui peuvent réagir avec un isocyanate et d'un composant contenant un isocyanate formé de particules dispersées dans le composant thermoplastique, **caractérisé en ce que**
la solidité du collage déterminée au moyen d'une machine d'essai de traction dans l'essai de poussée après stockage du composite pendant 72 heures dans un environnement à 85 °C et 85 % d'humidité relative (stockage humide et chaud) puis après stockage pendant 1 journée à 23 °C et 50 % d'humidité relative, représente au moins 50 % de la solidité du collage qui est déterminée pour un composite identique qui, après sa production, est stocké exclusivement à 23 °C et 50 % d'humidité relative.

15. Composite de deux substrats collés l'un à l'autre au moyen d'un film adhésif selon l'une des revendications 12 à 14, le film adhésif le produit de réaction d'une dispersion d'un composant thermoplastique contenant des groupes fonctionnels qui peuvent réagir avec un isocyanate et d'un composant contenant un isocyanate formé de particules dispersées dans le composant thermoplastique, **caractérisé en ce que**
le composite fait partie d'un dispositif optique, électronique et/ou mécanique de précision, en particulier d'un dispositif optique, électronique ou mécanique de précision transportable.

16. Composite selon l'une des revendications 12 à 15, **caractérisé en ce qu'**au moins un des substrats est transparent ou translucide.

17. Composite selon la revendication 16, **caractérisé en ce que**
le substrat transparent ou translucide est une fenêtre ou une lentille destinée à protéger des composants disposés au-dessous et/ou à produire des effets physico-optiques pour le fonctionnement du dispositif optique, électronique ou mécanique de précision.

18. Composite selon l'une des revendications 15 à 17, **caractérisé en ce que**
le dispositif optique, électronique ou mécanique de précision, notamment transportable, est choisi dans le groupe comprenant :
• les appareils photo, les appareils photo numériques, les accessoires de photographie (tels que les photomètres, les flashs, les diaphragmes, les boîtiers photo, les objectifs, etc.), les appareils photo argentiques, les caméras vidéo, les appareils photo numériques, les appareils de vision longue portée, les appareils de vision nocturne,
• les ordinateurs, les ordinateurs portables, les notebooks, les netbooks, les ultrabooks, les tablettes électroniques, les appareils à écran tactile (« appareils à écran tactile »), les ordinateurs de poche, les agendas électroniques et les organisateurs (appelés « organisateurs électroniques » ou « assistants numériques personnels », PDA), les machines à écrire, les modems, les accessoires informatiques tels que les souris, les tablettes à dessin, les microphones, les haut-parleurs,
• les lecteurs de livres électroniques (« e-books »),
• les téléviseurs (y compris les mini-téléviseurs), les lecteurs de films, les lecteurs vidéo, les moniteurs, les écrans, les afficheurs, les projecteurs,
• les radios, les baladeurs, les lecteurs de musique (par exemple les lecteurs CD, DVD, Blu-ray, cassettes, USB, MP3), les écouteurs,
• les imprimantes, les télécopieurs, les photocopieurs,
• les téléphones, les téléphones portables, les smartphones, les radios bidirectionnelles, les appareils mains libres
• les défibrillateurs, les glucomètres, les tensiomètres,
• les chargeurs de batterie, les appareils de mesure, les multimètres, les lampes telles que les lampes de poche, les pointeurs laser, etc.
• les détecteurs, les loupes optiques, les calculatrices de poche,
• les télécommandes, les commandes à distance, les consoles de jeux,
• les appareils GPS, les appareils de navigation,
• les appareils d'appel de personnes (téléavertisseurs, bips)
• les appareils de stockage de données (clés USB, disques durs externes, cartes mémoire)
• les montres-bracelets, les montres de poche, les montres à chaîne.

19. Utilisation d'un primaire contenant du silane pour améliorer la résistance à l'humidité/à la chaleur d'un collage de deux substrats au moyen d'un film adhésif à réactivité latente, qui contient un composant thermoplastique comportant des groupes fonctionnels qui peuvent réagir avec un isocyanate, et un composant contenant un isocyanate qui est formé de particules disposées dans le composant thermoplastique et qui est sensiblement désactivé dans la région de la surface de particules.

20. Utilisation selon la revendication 19 dans un procédé selon l'une des revendications 1 à 13.

21. Utilisation selon l'une des revendications 19 ou 20 dans la production d'un composite selon l'une des revendications 12 à 18.
